(19) Europäisches Patentamt
European Patent Office
Office européen des brevets

(11) EP 4 787 018 A1

(12) EUROPEAN PATENT APPLICATION
published in accordance with Art. 153(4) EPC

(43) Date of publication:
05.08.2026  Bulletin 2026/32

(21) Application number: 23953316.9

(22) Date of filing: 25.09.2023

(51) International Patent Classification (IPC):
*G01S 13/90* (2006.01)    *G01S 7/41* (2006.01)

(52) Cooperative Patent Classification (CPC):
**G01S 13/90;** G01S 7/41

(86) International application number:
**PCT/CN2023/121111**

(87) International publication number:
**WO 2025/065151 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: HUAWEI TECHNOLOGIES CO., LTD.
**Shenzhen, Guangdong 518129 (CN)**

(72) Inventors:
• ZHOU, Baojian
  **Shenzhen, Guangdong 518129 (CN)**
• LUO, Jiajin
  **Shenzhen, Guangdong 518129 (CN)**

• PENG, Xiaohui
  **Shenzhen, Guangdong 518129 (CN)**
• ZHANG, Ping
  **Shenzhen, Guangdong 518129 (CN)**
• YU, Yang
  **Shenzhen, Guangdong 518129 (CN)**
• HE, Jia
  **Shenzhen, Guangdong 518129 (CN)**
• YANG, Xun
  **Shenzhen, Guangdong 518129 (CN)**

(74) Representative: **Epping - Hermann - Fischer Patentanwaltsgesellschaft mbH**
**Schloßschmidstraße 5**
**80639 München (DE)**

(54) **METHOD, APPARATUS AND SYSTEM FOR IMAGING**

(57)     An imaging method, apparatus, and system are provided. The method includes: transmitting auxiliary request information, where the auxiliary request information is used to request one or more auxiliary apparatuses to assist a first imaging apparatus in imaging; and receiving an auxiliary signal from a first auxiliary apparatus, or transmitting an auxiliary signal to the first auxiliary apparatus, where the auxiliary signal and a first imaging signal received or transmitted by the first imaging apparatus are jointly used for imaging, and the one or more auxiliary apparatuses include the first auxiliary apparatus. The first imaging apparatus may be an apparatus in motion, locations of the one or more auxiliary apparatuses may be fixed, and the auxiliary signal may be used to determine a motion error of the first imaging apparatus, so that motion error compensation can be performed on an imaging result based on the auxiliary signal, thereby improving a focusing degree of an image. The technical solutions of this application may be used for synthetic aperture imaging. When a dominant scatter cannot be obtained or an obtained dominant scatter is unsatisfactory, the focusing degree of the image can be improved.

FIG. 3

**Description**

**TECHNICAL FIELD**

This application relates to the wireless communication field, and more specifically, to an imaging method, apparatus, and system.

**BACKGROUND**

In synthetic aperture imaging, a location error of an antenna phase center caused by motion of an antenna platform always exists. The location error causes a phase error of an echo of an imaging signal (referred to as an echo below), and further causes image defocusing and reduced image quality. In a current technical background, the location error may be corrected based on a dominant scatter. In other words, a motion error of an imaging apparatus is estimated based on the dominant scatter, and an imaging result is corrected based on the motion error, to implement image focusing. However, in a specific implementation process, the dominant scatter may not be obtained in an imaging scene. Consequently, the imaging result cannot be corrected by using a focusing technology based on the dominant scatter. Alternatively, in a specific implementation process, the obtained dominant scatter is not a scatter point with a sufficient amplitude. Consequently, effect of correcting the imaging result by using the focusing technology based on the dominant scatter is unsatisfactory.

**SUMMARY**

This application provides an imaging method, apparatus, and system, to improve a focusing degree of an image when a dominant scatter cannot be obtained in an imaging scene or an obtained dominant scatter is unsatisfactory.

According to a first aspect, an imaging method is provided. The method is applied to a first imaging apparatus, and the method includes: transmitting auxiliary request information, where the auxiliary request information is used to request one or more auxiliary apparatuses to assist the first imaging apparatus in imaging; and receiving an auxiliary signal from a first auxiliary apparatus, or transmitting an auxiliary signal to the first auxiliary apparatus, where the auxiliary signal and a first imaging signal received or transmitted by the first imaging apparatus are jointly used for imaging, and the one or more auxiliary apparatuses include the first auxiliary apparatus.

In the foregoing technical solution, a motion error of the first imaging apparatus may be determined based on the auxiliary signal transmitted between the first auxiliary apparatus and the first imaging apparatus. Therefore, an imaging result corresponding to the first imaging signal can be corrected based on the auxiliary signal. This helps improve a focusing degree of an image when a dominant scatter cannot be obtained in an imaging scene or an obtained dominant scatter is unsatisfactory.

According to a second aspect, an imaging method is provided. The method is applied to a first imaging apparatus, and the method includes: transmitting auxiliary request information, where the auxiliary request information is used to request one or more auxiliary apparatuses to assist the first imaging apparatus in imaging; and receiving an auxiliary signal from a first auxiliary apparatus, where the auxiliary signal and a first imaging signal received by the first imaging apparatus are jointly used for imaging, and the one or more auxiliary apparatuses include the first auxiliary apparatus.

In the foregoing technical solution, when receiving the auxiliary request information and determining to participate in assisting in imaging, an auxiliary apparatus may transmit the auxiliary signal to the first imaging apparatus, and does not need to transmit auxiliary response information to the imaging apparatus, thereby helping reduce signaling overheads in an assisted imaging process.

According to a third aspect, an imaging method is provided. The method is applied to a first imaging apparatus, and the method includes: transmitting auxiliary request information, where the auxiliary request information is used to request one or more auxiliary apparatuses to assist the first imaging apparatus in imaging; and transmitting an auxiliary signal to a first auxiliary apparatus, where the auxiliary signal and a first imaging signal received by the first imaging apparatus are jointly used for imaging, and the one or more auxiliary apparatuses include the first auxiliary apparatus.

In the foregoing technical solution, the first imaging apparatus may determine, based on a moment at which the first imaging signal is received, a moment at which the auxiliary signal is transmitted, that is, it is easier to control an occasion of transmitting the auxiliary signal, thereby helping reduce complexity of an auxiliary signal-based imaging process.

In addition, in the technical solutions of the second aspect and the third aspect, if a stationary imaging apparatus transmits an imaging signal, the first imaging apparatus receives the first imaging signal, and a scale of an antenna array of the stationary imaging apparatus is greater than a scale of an antenna array of the first imaging apparatus, signal power of the first imaging signal received by the first imaging apparatus is also large, thereby helping reduce difficulty in subsequent imaging processing.

According to a fourth aspect, an imaging method is provided. The method is applied to a first imaging apparatus, and the method includes: transmitting auxiliary request information, where the auxiliary request information is used to request one or more auxiliary apparatuses to assist the first imaging apparatus in imaging; and receiving an auxiliary signal from a first auxiliary apparatus, where the auxiliary signal and a first imaging signal transmitted by the first imaging apparatus are jointly used for imaging, and the one or more auxiliary apparatuses include the first auxiliary apparatus.

In the foregoing technical solution, when receiving the auxiliary request information and determining to participate in assisting in imaging, the auxiliary apparatus may transmit the auxiliary signal to the imaging apparatus, and does not need to transmit auxiliary response information to the imaging apparatus, thereby helping reduce signaling overheads in an assisted imaging process.

According to a fifth aspect, an imaging method is provided. The method is applied to a first imaging apparatus, and the method includes: transmitting auxiliary request information, where the auxiliary request information is used to request one or more auxiliary apparatuses to assist the first imaging apparatus in imaging; and transmitting an auxiliary signal to a first auxiliary apparatus, where the auxiliary signal and a first imaging signal transmitted by the first imaging apparatus are jointly used for imaging, and the one or more auxiliary apparatuses include the first auxiliary apparatus.

In the foregoing technical solution, the first imaging apparatus may determine, based on a moment at which the first imaging signal is transmitted, a moment at which the auxiliary signal is transmitted, that is, it is easier to control an occasion of transmitting the auxiliary signal, thereby helping reduce complexity of an auxiliary signal-based imaging process.

In addition, in the technical solutions of the fourth aspect and the fifth aspect, if the first imaging apparatus transmits the first imaging signal, a stationary imaging apparatus receives an echo of an imaging signal, and a scale of an antenna array of the stationary imaging apparatus is greater than a scale of an antenna array of the first imaging apparatus, the stationary imaging apparatus may receive the echo of the imaging signal in single reception without time-frequency multiplexing, thereby helping reduce a resource waste caused by time-frequency multiplexing.

With reference to any one of the first aspect to the fifth aspect, in some implementations of any one of the first aspect to the fifth aspect, the auxiliary request information indicates at least one of the following: location information of the first imaging apparatus or a first time-frequency resource that is used to transmit the auxiliary signal.

In the foregoing technical solution, the auxiliary request information indicates the location information of the first imaging apparatus or the first time-frequency resource, so that the first auxiliary apparatus determines whether to assist the first imaging apparatus in imaging. In addition, the auxiliary request information indicates both the location information of the first imaging apparatus and the first time-frequency resource, thereby helping reduce signaling overheads.

With reference to any one of the first aspect to the fifth aspect, in some implementations of any one of the first aspect to the fifth aspect, the method further includes: receiving auxiliary response information from a second auxiliary apparatus, where the first auxiliary response information indicates whether the second auxiliary apparatus participates in assisting the first imaging apparatus in imaging, and the one or more auxiliary apparatuses include the second auxiliary apparatus.

In a specific implementation, the second auxiliary apparatus feeds back, to the first imaging apparatus through the auxiliary response information, whether the second auxiliary apparatus participates in assisting the first imaging apparatus in imaging, to prevent the first imaging apparatus from transmitting an auxiliary signal to an auxiliary apparatus that does not participate in assisting the first imaging apparatus in imaging, thereby helping reduce signaling overheads.

With reference to any one of the first aspect to the fifth aspect, in some implementations of any one of the first aspect to the fifth aspect, the method further includes: receiving second auxiliary response information from the first auxiliary apparatus, where the second auxiliary response information indicates at least one of the following: that the first auxiliary apparatus participates in assisting the first imaging apparatus in imaging, a location of the first auxiliary apparatus, or a second time-frequency resource used to transmit the auxiliary signal.

For example, the first time-frequency resource includes the second time-frequency resource, or the first time-frequency resource is the same as the second time-frequency resource.

In the foregoing technical solution, the second auxiliary response information indicates the location of the first auxiliary apparatus, so that when receiving information that is about determining to participate in assistance from a plurality of auxiliary apparatuses, the first imaging apparatus determines one or more auxiliary apparatuses from the plurality of auxiliary apparatuses to transmit the auxiliary signal. Alternatively, the second auxiliary response information indicates the location of the first auxiliary apparatus, so that the first imaging apparatus determines the motion error of the first imaging apparatus based on the location of the first auxiliary apparatus, the motion information of the first imaging apparatus, and the phase delay of the auxiliary signal, and further compensates for the motion error of the first imaging apparatus, to improve a focusing degree of an image.

With reference to any one of the first aspect to the fifth aspect, in some implementations of any one of the first aspect to the fifth aspect, the method further includes: receiving third auxiliary response information, where the third auxiliary response information indicates that a third auxiliary apparatus participates in assisting the first imaging apparatus in imaging, a distance between the first auxiliary apparatus and an imaging area corresponding to the first imaging signal is shorter than a distance between the third auxiliary apparatus and the imaging area, and the one or more auxiliary apparatuses include the third auxiliary apparatus.

In some possible implementations, the third auxiliary apparatus and the second auxiliary apparatus are a same apparatus, and the auxiliary response information and the third auxiliary response information may be the same.

In the foregoing technical solution, when the first imaging apparatus receives information that is about determining to participate in assistance and that is fed back by two or more auxiliary apparatuses, the first imaging apparatus may select an auxiliary apparatus that is closer to the imaging area to transmit an auxiliary signal. In this way, motion of the first imaging apparatus has similar impact on the auxiliary signal and the first imaging signal, so that a focusing degree of an image formed based on the auxiliary signal is higher.

With reference to any one of the first aspect, the fourth aspect, and the fifth aspect, in some implementations of any one of the first aspect, the fourth aspect, and the fifth aspect, the first imaging apparatus is configured to transmit the first imaging signal, the second imaging apparatus is configured to receive an echo of the first imaging signal, and the method further includes: transmitting first auxiliary information to the second imaging apparatus, where the first auxiliary information indicates a delay and/or a phase delay of the auxiliary signal.

For example, the first auxiliary information may be obtained by the first imaging apparatus by performing pulse compression or Fourier transform on the auxiliary signal; or the first auxiliary information may be obtained by the first auxiliary apparatus by performing pulse compression or Fourier transform on the auxiliary signal, and transmitted to the first imaging apparatus.

In the foregoing technical solution, the first imaging apparatus transmits the first auxiliary information to the second imaging apparatus, so that the second imaging apparatus corrects an image generated based on the echo of the first imaging signal, thereby improving a focusing degree of the image.

With reference to any one of the first aspect, the third aspect, and the fifth aspect, in some implementations of any one of the first aspect, the third aspect, and the fifth aspect, the method further includes: receiving second auxiliary information from the first auxiliary apparatus, where the second auxiliary information indicates a delay and/or a phase delay of the auxiliary signal.

In the foregoing technical solution, when the first imaging apparatus includes an imaging signal receiver, the first imaging signal generates an image based on the second auxiliary information. This can avoid using an image autofocus algorithm based on a dominant scatter, and reduce complexity of performing focusing processing on an image.

With reference to any one of the first aspect to the fifth aspect, in some implementations of any one of the first aspect to the fifth aspect, the auxiliary signal is used to determine a motion error of the first imaging apparatus, where the motion error is used to correct an imaging result obtained based on the first imaging signal.

With reference to any one of the first aspect to the fifth aspect, in some implementations of any one of the first aspect to the fifth aspect, the phase delay and/or the delay of the auxiliary signal are/is used to determine the motion error of the first imaging apparatus.

With reference to any one of the first aspect, the second aspect, and the fourth aspect, in some implementations of any one of the first aspect, the second aspect, and the fourth aspect, the auxiliary signal is used to construct a dominant scatter, where the dominant scatter is used to determine the motion error of the first imaging apparatus.

With reference to any one of the first aspect to the fifth aspect, in some implementations of any one of the first aspect to the fifth aspect, that the auxiliary signal and the first imaging signal received or transmitted by the first imaging apparatus are jointly used for imaging includes: The phase delay of the auxiliary signal, motion information of the first imaging apparatus, and location information of the first auxiliary apparatus are used to determine the motion error of the first imaging apparatus, where the motion error of the first imaging apparatus is used to correct the imaging result obtained based on the first imaging signal.

According to a sixth aspect, an imaging method is provided. The method is applied to a first auxiliary apparatus, and the method includes: receiving first auxiliary request information, where the first auxiliary request information is used to request the first auxiliary apparatus to assist a first imaging apparatus in imaging; and transmitting an auxiliary signal to the first imaging apparatus, or receiving an auxiliary signal from the first imaging apparatus, where the auxiliary signal and a first imaging signal received or transmitted by the first imaging apparatus are jointly used for imaging.

For example, the auxiliary request information in the first aspect may include the first auxiliary request information.

According to a seventh aspect, an imaging method is provided. The method is applied to a first auxiliary apparatus, and the method includes: receiving auxiliary request information, where the auxiliary request information is used to request one or more auxiliary apparatuses to assist a first imaging apparatus in imaging; and transmitting an auxiliary signal to the first imaging apparatus, where the auxiliary signal and a first imaging signal received by the first imaging apparatus are jointly used for imaging, and the one or more auxiliary apparatuses include the first auxiliary apparatus.

According to an eighth aspect, an imaging method is provided. The method is applied to a first auxiliary apparatus, and the method includes: receiving auxiliary request information, where the auxiliary request information is used to request one or more auxiliary apparatuses to assist a first imaging apparatus in imaging; and receiving an auxiliary signal from a first imaging apparatus, where the auxiliary signal and a first imaging signal received by the first imaging apparatus are jointly used for imaging, and the one or more auxiliary apparatuses include the first auxiliary apparatus.

According to a ninth aspect, an imaging method is provided. The method is applied to a first auxiliary apparatus, and the method includes: receiving auxiliary request information, where the auxiliary request information is used to request one or more auxiliary apparatuses to assist a first imaging apparatus in imaging; and transmitting an auxiliary signal to the first imaging apparatus, where the auxiliary signal and a first imaging signal transmitted by the first imaging apparatus are jointly used for imaging, and the one or more auxiliary apparatuses include the first auxiliary apparatus.

According to a tenth aspect, an imaging method is provided. The method is applied to a first auxiliary apparatus, and the method includes: receiving auxiliary request information, where the auxiliary request information is used to request one or more auxiliary apparatuses to assist a first imaging apparatus in imaging; and receiving an auxiliary signal from the first imaging apparatus, where the auxiliary signal and a first imaging signal transmitted by the first imaging apparatus are jointly used for imaging, and the one or more auxiliary apparatuses include the first auxiliary apparatus.

For beneficial effect of the sixth aspect to the tenth aspect and some implementations of the sixth aspect to the tenth aspect, refer to descriptions in the first aspect to the fifth aspect. Details are not described herein again.

With reference to any one of the sixth aspect to the tenth aspect, in some implementations of any one of the sixth aspect to the tenth aspect, the first auxiliary request information indicates at least one of the following: location information of the first imaging apparatus or a first time-frequency resource that is used to transmit the auxiliary signal.

With reference to any one of the sixth aspect to the tenth aspect, in some implementations of any one of the sixth aspect to the tenth aspect, the method further includes: transmitting second auxiliary response information to the first imaging apparatus, where the second auxiliary response information indicates at least one of the following: that the first auxiliary apparatus participates in assisting the first imaging apparatus in imaging, a location of the first auxiliary apparatus, or a second time-frequency resource used to transmit the auxiliary signal.

With reference to any one of the sixth aspect to the tenth aspect, in some implementations of any one of the sixth aspect to the tenth aspect, the method further includes: receiving second auxiliary request information, where the second auxiliary request information is used to request the first auxiliary apparatus to assist a third imaging apparatus in imaging; and transmitting fourth auxiliary response information to the third imaging apparatus, where the fourth auxiliary response information indicates whether the first auxiliary apparatus participates in assisting the third imaging apparatus in imaging.

With reference to any one of the sixth aspect, the eighth aspect, and the tenth aspect, in some implementations of any one of the sixth aspect, the eighth aspect, and the tenth aspect, the method further includes: transmitting second auxiliary information to the first imaging apparatus, where the second auxiliary information indicates a delay and/or a phase delay of the auxiliary signal.

With reference to the sixth aspect or the tenth aspect, in some implementations of the sixth aspect or the tenth aspect, the first imaging apparatus is configured to transmit the first imaging signal, the second imaging apparatus is configured to receive an echo of the first imaging signal, and the method further includes: transmitting third auxiliary information to the second imaging apparatus, where the third auxiliary information indicates a delay and/or a phase delay of the auxiliary signal. With reference to any one of the sixth aspect to the tenth aspect, in some implementations of any one of the sixth aspect to the tenth aspect, the auxiliary signal is used to determine a motion error of the first imaging apparatus, where the motion error is used to correct an imaging result obtained based on the first imaging signal.

With reference to any one of the sixth aspect to the tenth aspect, in some implementations of any one of the sixth aspect to the tenth aspect, that the auxiliary signal and the first imaging signal received or transmitted by the first imaging apparatus are jointly used for imaging includes: The phase delay of the auxiliary signal, motion information of the first imaging apparatus, and location information of the first auxiliary apparatus are used to determine the motion error of the first imaging apparatus, where the motion error of the first imaging apparatus is used to correct the imaging result obtained based on the first imaging signal.

According to an eleventh aspect, an imaging apparatus is provided. The apparatus may be the first imaging apparatus in the first aspect, or the apparatus may be disposed in the first imaging apparatus in the first aspect. The apparatus includes: a transmitting unit, configured to transmit auxiliary request information, where the auxiliary request information is used to request one or more auxiliary apparatuses to assist the first imaging apparatus in imaging; and a receiving unit, configured to receive an auxiliary signal from the first auxiliary apparatus. Alternatively, the transmitting unit is further configured to transmit an auxiliary signal to the first auxiliary apparatus, where the auxiliary signal and a first imaging signal received or transmitted by the first imaging apparatus are jointly used for imaging, and the one or more auxiliary apparatuses include the first auxiliary apparatus.

With reference to the eleventh aspect, in some implementations of the eleventh aspect, the auxiliary request information indicates at least one of the following: location information of the first imaging apparatus or a first time-frequency resource that is used to transmit the auxiliary signal.

With reference to the eleventh aspect, in some implementations of the eleventh aspect, the receiving unit is further configured to receive auxiliary response information from a second auxiliary apparatus, where the first auxiliary response information indicates whether the second auxiliary apparatus participates in assisting the first imaging apparatus in imaging, and the one or more auxiliary apparatuses include the second auxiliary apparatus.

With reference to the eleventh aspect, in some implementations of the eleventh aspect, the receiving unit is further configured to receive second auxiliary response information from the first auxiliary apparatus, where the second auxiliary response information indicates at least one of the following: that the first auxiliary apparatus participates in assisting the first imaging apparatus in imaging, a location of the first auxiliary apparatus, or a second time-frequency resource used to transmit the auxiliary signal.

With reference to the eleventh aspect, in some implementations of the eleventh aspect, the receiving unit is further configured to receive third auxiliary response information, where the third auxiliary response information indicates that a third auxiliary apparatus participates in assisting the first imaging apparatus in imaging, a distance between the first auxiliary apparatus and an imaging area corresponding to the first imaging signal is shorter than a distance between the third auxiliary apparatus and the imaging area, and the one or more auxiliary apparatuses include the third auxiliary apparatus.

With reference to the eleventh aspect, in some implementations of the eleventh aspect, the first imaging apparatus is configured to transmit the first imaging signal, a second imaging apparatus is configured to receive an echo of the first imaging signal, and the transmitting unit is further configured to transmit first auxiliary information to the second imaging apparatus, where the first auxiliary information indicates a delay and/or a phase delay of the auxiliary signal.

With reference to the eleventh aspect, in some implementations of the eleventh aspect, the receiving unit is further configured to receive second auxiliary information from the first auxiliary apparatus, where the second auxiliary information indicates a delay and/or a phase delay of the auxiliary signal.

According to a twelfth aspect, an imaging apparatus is provided. The apparatus may be the first auxiliary apparatus in the sixth aspect, or the apparatus may be disposed in the first auxiliary apparatus in the sixth aspect. The apparatus includes: a receiving unit, configured to receive first auxiliary request information, where the first auxiliary request information is used to request the first auxiliary apparatus to assist a first imaging apparatus in imaging; and a transmitting unit, configured to transmit an auxiliary signal to the first imaging apparatus. Alternatively, the receiving unit is further configured to receive an auxiliary signal from the first imaging apparatus, where the auxiliary signal and a first imaging signal received or transmitted by the first imaging apparatus are jointly used for imaging.

With reference to the twelfth aspect, in some implementations of the twelfth aspect, the first auxiliary request information indicates at least one of the following: location information of the first imaging apparatus or a first time-frequency resource that is used to transmit the auxiliary signal.

With reference to the twelfth aspect, in some implementations of the twelfth aspect, the transmitting unit is further configured to transmit second auxiliary response information to the first imaging apparatus, where the second auxiliary response information indicates at least one of the following: that the first auxiliary apparatus participates in assisting the first imaging apparatus in imaging, a location of the first auxiliary apparatus, or a second time-frequency resource used to transmit the auxiliary signal.

With reference to the twelfth aspect, in some implementations of the twelfth aspect, the receiving unit is further configured to receive second auxiliary request information, where the second auxiliary request information is used to request the first auxiliary apparatus to assist a third imaging apparatus in imaging; and the transmitting unit is further configured to transmit fourth auxiliary response information to the third imaging apparatus, where the fourth auxiliary response information indicates whether the first auxiliary apparatus participates in assisting the third imaging apparatus in imaging.

With reference to the twelfth aspect, in some implementations of the twelfth aspect, the transmitting unit is further configured to transmit second auxiliary information to the first imaging apparatus, where the second auxiliary information indicates a delay and/or a phase delay of the auxiliary signal.

With reference to the twelfth aspect, in some implementations of the twelfth aspect, the first imaging apparatus is configured to transmit the first imaging signal, a second imaging apparatus is configured to receive an echo of the first imaging signal, and the transmitting unit is further configured to transmit third auxiliary information to the second imaging apparatus, where the third auxiliary information indicates a delay and/or a phase delay of the auxiliary signal.

According to a thirteenth aspect, a communication apparatus is provided. The apparatus includes a processor, configured to execute a computer program stored in a memory, to enable the apparatus to perform the method in any possible implementation of the first aspect to the tenth aspect. With reference to the thirteenth aspect, in some implementations of the thirteenth aspect, the apparatus further includes the memory.

According to a fourteenth aspect, this application provides a communication apparatus. The apparatus includes a processor and a communication interface, and the processor reads instructions stored in a memory through the communication interface, to perform the method provided in any one of the foregoing aspects or the implementations of the foregoing aspects.

Optionally, the processor may be a processing circuit or a logic circuit, and the communication interface may be an input or input interface. The processing circuit or the logic circuit is configured to process information, and the input or output interface is configured to receive/transmit information or data.

According to a fifteenth aspect, an imaging system is provided. The system includes the apparatus in any possible implementation of the eleventh aspect and the apparatus in any possible implementation of the twelfth aspect.

With reference to the fifteenth aspect, in some implementations of the fifteenth aspect, the system further includes another imaging apparatus, and the another imaging apparatus is configured to receive an echo of a first imaging signal, or the another imaging apparatus is configured to transmit a second imaging signal, where the first imaging signal is an echo of the second imaging signal.

According to a sixteenth aspect, a computer program product is provided. The computer program product includes computer program code, and when the computer program code runs on a computer, the computer is enabled to perform the method in any possible implementation of the first aspect to the tenth aspect.

It should be noted that all or a part of the computer program code may be stored in a first storage medium, and the first storage medium may be encapsulated together with a processor, or may be encapsulated separately from the processor.

According to a seventeenth aspect, a computer-readable medium is provided. The foregoing computer-readable medium stores instructions, and when the instructions are executed by a processor, the processor is enabled to implement the method in any one of the possible implementations of the first aspect to the tenth aspect.

According to an eighteenth aspect, a chip system is provided. The chip system includes a logic circuit, configured to: invoke a computer program from a memory, and run the computer program, to enable a communication device on which the chip system is installed to perform the method in any one of the possible implementations of the first aspect to the tenth aspect.

## BRIEF DESCRIPTION OF DRAWINGS

FIG. 1 is a diagram of an imaging scene;
FIG. 2 is a diagram of an imaging scene according to an embodiment of this application;
FIG. 3 is a schematic flowchart of an imaging method according to an embodiment of this application;
FIG. 4 is another schematic flowchart of an imaging method according to an embodiment of this application;
FIG. 5 is a diagram of a power spectrum of an auxiliary signal according to an embodiment of this application;
FIG. 6 is still another schematic flowchart of an imaging method according to an embodiment of this application;
FIG. 7 is yet another schematic flowchart of an imaging method according to an embodiment of this application;
FIG. 8 is still yet another schematic flowchart of an imaging method according to an embodiment of this application;
FIG. 9 is further another schematic flowchart of an imaging method according to an embodiment of this application;
FIG. 10 is further another schematic flowchart of an imaging method according to an embodiment of this application;
FIG. 11(a), FIG. 11(b), and FIG. 11(c) are a diagram of a comparison between imaging results obtained by using a method in this application and imaging results obtained by not using a method in this application;
FIG. 12 is a block diagram of an imaging apparatus according to an embodiment of this application;
FIG. 13 is another block diagram of an imaging apparatus according to an embodiment of this application; and
FIG. 14 is a block diagram of a chip system according to an embodiment of this application.

## DESCRIPTION OF EMBODIMENTS

To facilitate understanding of the technical solutions in this application, the following describes terms in this application.

1. Dominant scatter: Dominant scatter, also referred to as a strong scatter point, is a maximum value of a local amplitude in a synthetic aperture imaging result. In other words, an amplitude of the strong scatter point is greater than an amplitude of another scatter point. Occurrence of the dominant scatter is determined by strength of a reflection signal of a scatter point on a corresponding object and coherence of the reflection signal at locations of a plurality of transceiver antennas.

2. Synthetic aperture imaging: A small-aperture antenna moves at a constant speed on a straight-line motion path, and receives and stores echoes at determined locations in sequence. Coherent superposition processing is performed on echoes at different locations based on spatial locations and phase relationships, to synthesize a virtual antenna array with a large aperture, thereby obtaining high resolution in a motion direction.

3. Echo: In synthetic aperture imaging, an echo is a signal reflected by an imaging object (or referred to as a to-be-imaged object).

The following describes the technical solutions of this application with reference to the accompanying drawings.

The technical solutions in embodiments of this application may be applied to various communication systems, for example, a global system of mobile communication (global system of mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a wireless local area network (wireless local area network, WLAN) scenario, a fifth generation (5th generation, 5G) system, a new radio (new radio, NR) system, a sixth generation (6th generation, 6G) system, an internet of things (internet of things, IoT) network, a vehicle to everything (vehicle to everything, V2X), or the like. In addition, the technical solutions provided in embodiments of this application may also be applicable to, for example, standards related to the Institute of Electrical and Electronics Engineers (institute of electrical and electronics engineers, IEEE) 802.11, such as the 802.11a/b/g standard, the 802.11n standard, the 802.11ac standard, the 802.11ax standard, or a next-generation Wi-Fi protocol of IEEE 802.11ax like 802.11be, Wi-Fi 7, extremely high throughput (extremely high throughput, EHT), 802.11ad, 802.11ay, or 802.11bf, or a next generation of 802.11be like Wi-Fi 8, may be further applied to an ultra-wideband (ultra-wideband, UWB)-based wireless personal area network system, for example, an 802.15 series standard, and may be further applied to a sensing (sensing) system, for example, the 802.11bf series standards.

The foregoing communication systems applicable to this application are only examples for description, and communication systems applicable to this application are not limited thereto. Unified descriptions are provided herein, and details are not described below again.

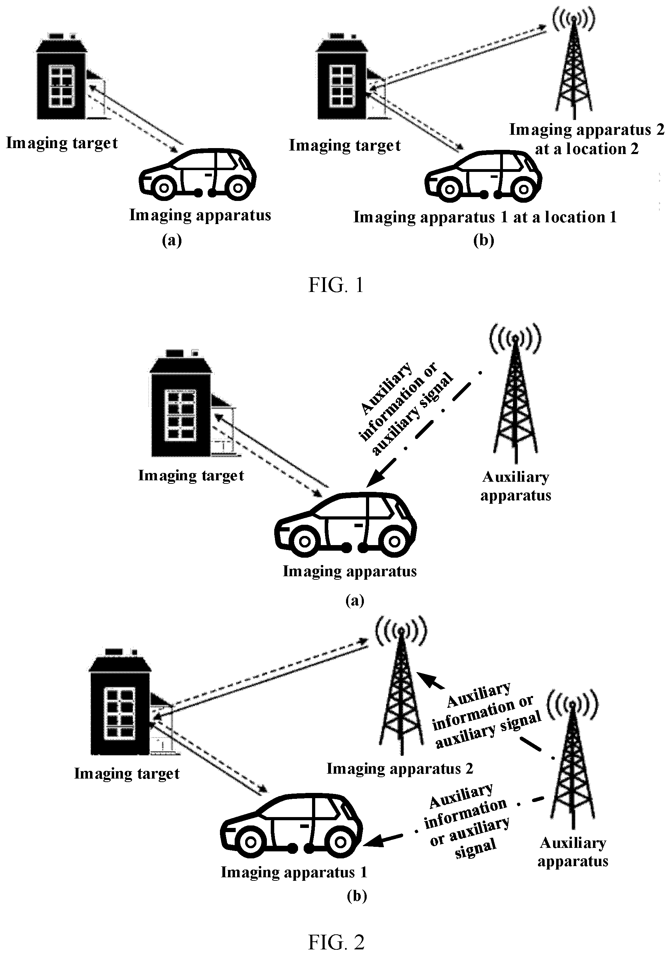

FIG. 1 is a diagram of a wireless communication system applicable to embodiments of this application. (a) in FIG. 1 shows a monostatic synthetic aperture imaging system. An imaging signal transmitter and an imaging signal receiver use a same antenna, that is, there may be only one imaging apparatus in an imaging scene. (b) in FIG. 1 shows a bistatic synthetic aperture imaging system. An imaging signal transmitter and an imaging signal receiver are respectively disposed at different locations. For example, the imaging signal transmitter is disposed in an imaging apparatus 1 located at a location 1, and the imaging signal receiver is disposed in an imaging apparatus 2 located at a location 2. Alternatively, the imaging signal transmitter is disposed in the imaging apparatus 2 located at the location 2, and the imaging signal receiver is disposed in the imaging apparatus 1 located at the location 1. In addition, one imaging signal transmitter and a plurality of imaging signal receivers distributed at different locations may be further disposed to form a multistatic aperture imaging system; or a plurality of imaging signal transmitters and imaging signal receivers distributed at different locations are disposed to form a multistatic aperture imaging system. In an imaging process, the imaging signal transmitter transmits an imaging signal to an imaging object, and the imaging signal receiver receives the imaging signal reflected by the imaging object, that is, an echo, and performs imaging based on the echo.

As described above, in a synthetic aperture imaging process, a location error of an antenna phase center caused by motion of an antenna platform always exists. The location error causes a phase error of the echo, and further causes image defocusing and reduced image quality. In a specific implementation process, a dominant scatter may not be obtained in an imaging scene. Consequently, an imaging result cannot be corrected by using a focusing technology based on the dominant scatter. Alternatively, in the specific implementation process, an obtained dominant scatter is not a scatter point with a maximum amplitude. Consequently, effect of correcting an imaging result by using a focusing technology based on the dominant scatter is unsatisfactory.

In view of this, embodiments of this application provide an imaging method, apparatus, and system, so that a motion error of an imaging apparatus can be determined based on an auxiliary signal or auxiliary information transmitted by an auxiliary apparatus, to compensate for the motion error of the imaging apparatus, or perform phase compensation on an echo based on the motion error of the imaging apparatus, thereby reducing a defocusing degree of an image and improving a focusing degree of the image.

FIG. 2 is a diagram of another wireless communication system applicable to embodiments of this application. As shown in (a) in FIG. 2, an auxiliary apparatus is added to a monostatic synthetic aperture imaging system. The auxiliary apparatus may transmit auxiliary information or an auxiliary signal to an imaging apparatus, so that the imaging apparatus corrects an imaging result based on the auxiliary information or the auxiliary signal. The auxiliary signal is used to determine a motion error of the imaging apparatus, and the motion error is used to correct the imaging result obtained based on an echo. The auxiliary information is determined based on the auxiliary signal, the auxiliary information indicates a delay and/or a phase delay of the auxiliary signal, and the motion error of the imaging apparatus may be determined based on the delay and/or the phase delay of the auxiliary signal. As shown in (b) in FIG. 2, an auxiliary apparatus is added to a bistatic synthetic aperture imaging system. The auxiliary apparatus may transmit auxiliary information or an auxiliary signal to an imaging apparatus (for example, an imaging apparatus 1 and/or an imaging apparatus 2) in which an imaging signal receiver is disposed, so that the imaging apparatus in which the imaging signal receiver is disposed corrects an imaging result based on the auxiliary information or the auxiliary signal.

For example, the imaging apparatuses shown in FIG. 2 may include various devices that support imaging, the imaging apparatuses may be chips, chip systems, or processors disposed in the devices that support imaging, or the imaging apparatuses may be logic modules or software that can implement all or some of functions of the devices that support imaging. For example, the devices that support imaging may include but are not limited to a base station (base station, BS), user equipment (user equipment, UE), an access point (access point, AP), and a station (station, STA). The station may be a non-access point station (non-access point station, non-AP STA), which is referred to as a non-AP station or a STA for short. The auxiliary apparatuses shown in FIG. 2 may include devices that are configured to assist in imaging and whose locations are determined, the auxiliary apparatuses may be chips, chip systems, or processors disposed in the devices configured to assist in imaging, or the auxiliary apparatuses may be logic modules or software that can implement all or some of functions of the devices configured to assist in imaging. The devices configured to assist in imaging may include but are not limited to a BS, UE, an AP, and a STA.

The imaging apparatus and/or the auxiliary apparatus in this application may be deployed on land, including indoor or outdoor, handheld, or vehicle-mounted; may be deployed on water; or may be deployed on aircrafts, balloons and satellites in the air. Scenarios in which the imaging apparatus and the auxiliary apparatus are located are not limited in embodiments of this application.

Based on the wireless communication system shown in FIG. 2, this application provides an imaging method.

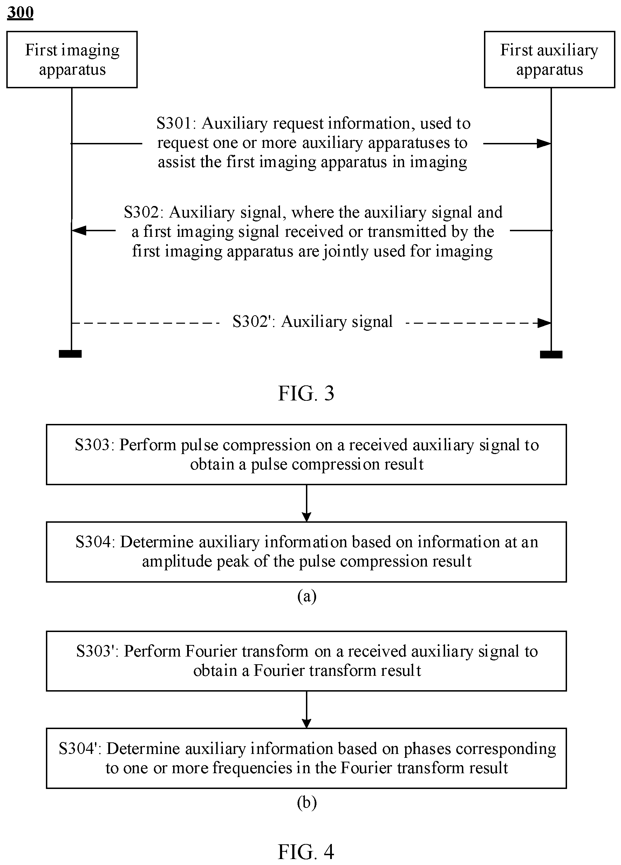

FIG. 3 is a schematic flowchart of an imaging method according to an embodiment of this application. A method 300 may be performed by a first imaging apparatus and a first auxiliary apparatus. The first imaging apparatus may be any one of the imaging apparatus, the imaging apparatus 1, and the imaging apparatus 2 shown in FIG. 2, and the first auxiliary apparatus may be the auxiliary apparatus shown in FIG. 2. The method 300 includes S301 and S302 (or S302'). S301: The first imaging apparatus transmits auxiliary request information, where the auxiliary request information is used to request one or more auxiliary apparatuses to assist the first imaging apparatus in imaging.

The one or more auxiliary apparatuses include the first auxiliary apparatus. The auxiliary request information may include first auxiliary request information, and the first auxiliary request information is used to request the first auxiliary apparatus to assist the first imaging apparatus in imaging. In some implementations, a location of each of the one or more auxiliary apparatuses is fixed, or a motion path of each of the one or more auxiliary apparatuses is fixed, so that the location of each of the one or more auxiliary apparatuses can be accurately determined.

Assisting the first imaging apparatus in imaging may be understood as assisting the first imaging apparatus in correcting an imaging result, or assisting the first imaging apparatus in generating an image with a higher focusing degree.

S302: The first imaging apparatus receives an auxiliary signal from the first auxiliary apparatus, where the auxiliary signal and a first imaging signal received or transmitted by the first imaging apparatus are jointly used for imaging.

In some implementations, after S301 is performed, S302' is performed: The first imaging apparatus transmits an auxiliary signal to the first auxiliary apparatus.

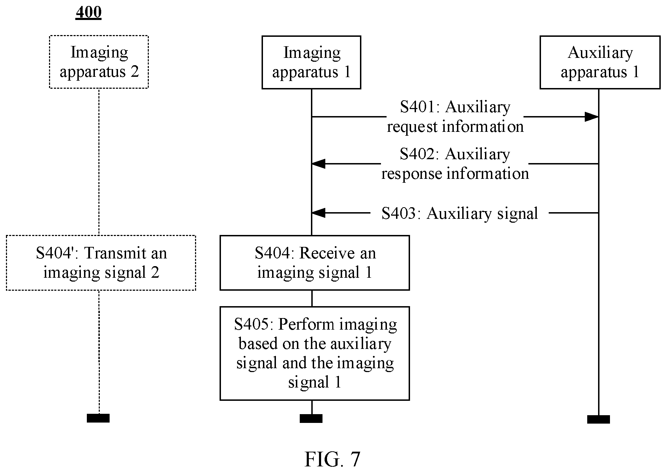

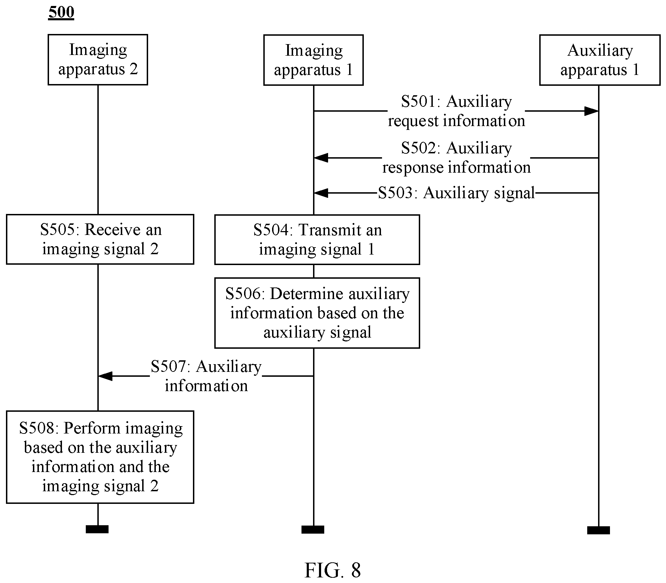

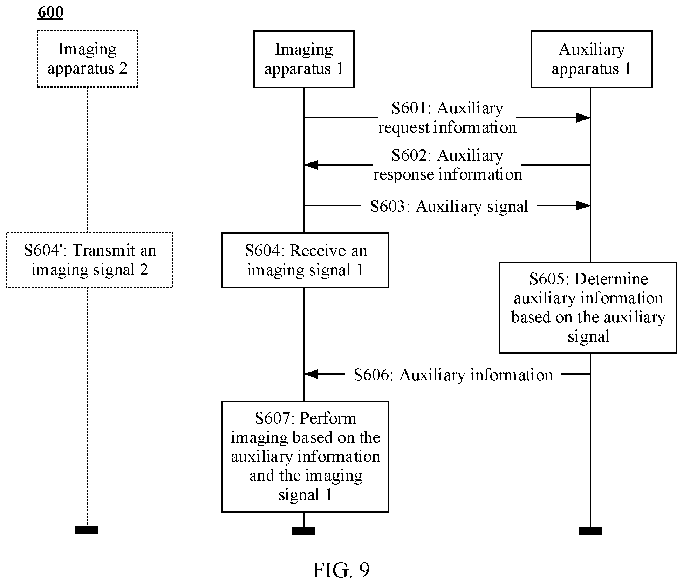

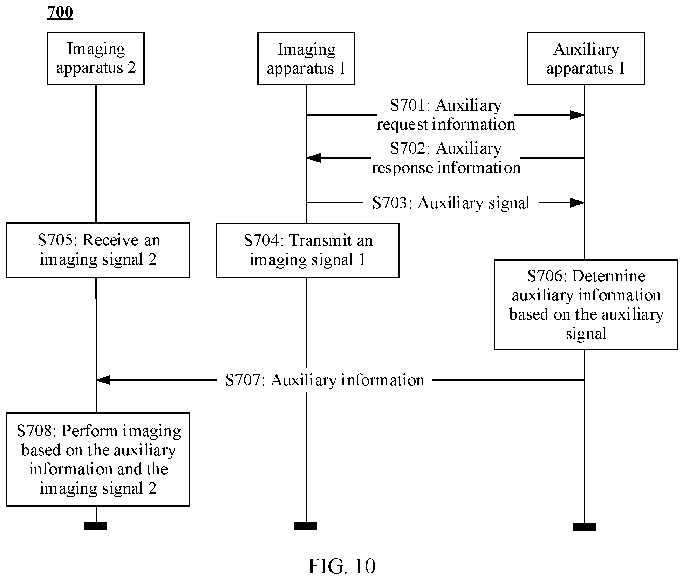

In a monostatic synthetic aperture imaging system, the first imaging apparatus includes an imaging signal receiver and an imaging signal transmitter, and the first imaging apparatus may be in a moving state. In a bistatic synthetic aperture imaging system or a multistatic synthetic aperture imaging system, the first imaging apparatus may include an imaging signal receiver, or may include an imaging signal transmitter, and the first imaging apparatus may be in a moving state. When the first imaging apparatus includes only the imaging signal receiver, the imaging signal transmitter may be disposed in a stationary device used for imaging. When the first imaging apparatus includes only the imaging signal transmitter, the imaging signal receiver may be disposed in a stationary device used for imaging. For more detailed descriptions of receiving the first imaging signal by the imaging signal receiver included in the first imaging apparatus, refer to the following embodiments corresponding to FIG. 7 and FIG. 9. For more detailed descriptions of transmitting the first imaging signal by the imaging signal transmitter included in the first imaging apparatus, refer to the following embodiments corresponding to FIG. 8 and FIG. 10. Details are not described herein.

Motion of the first imaging apparatus may cause an offset of an antenna phase center of the first imaging apparatus. When the first imaging apparatus includes the imaging apparatus receiver, an error generated by the offset of the antenna phase center causes defocusing of an image obtained based on the first imaging signal received by the first imaging apparatus. When the first imaging apparatus includes the imaging apparatus transmitter, an error generated by the offset of the antenna phase center causes defocusing of an image obtained based on an echo that is formed after the first imaging signal transmitted by the first imaging apparatus is reflected by the imaging object. In some implementations, the motion error of the first imaging apparatus may be determined based on a phase delay or a delay introduced in a transmission process of the auxiliary signal. A location of the first imaging apparatus is corrected based on the motion error of the first imaging apparatus, or phase compensation is performed on the first imaging signal based on the motion error of the first imaging apparatus. This helps improve a focusing degree of an image generated by using the first imaging signal.

In some other implementations, if the auxiliary signal is transmitted by the first auxiliary apparatus to the first imaging apparatus, a dominant scatter may be further constructed based on the auxiliary signal, and focusing of an image generated by using the first imaging signal is improved by using an autofocus algorithm based on the constructed dominant scatter.

More specifically, because the auxiliary signal received by the receiver passes through a channel between the first imaging apparatus and the first auxiliary apparatus, when the first imaging apparatus is in motion, the delay and the phase delay between the auxiliary signal received by the receiver and the auxiliary signal transmitted by the transmitter change due to motion of the first imaging apparatus. Therefore, the delay or the phase delay may be used to determine the motion error of the first imaging apparatus. When the first imaging apparatus receives the auxiliary signal from the first auxiliary apparatus, the receiver is the first imaging apparatus, and the transmitter is the first auxiliary apparatus. When the first imaging apparatus transmits the auxiliary signal to the first auxiliary apparatus, the receiver is the first auxiliary apparatus, and the transmitter is the first imaging apparatus.

It may be understood that a phase delay of a signal may be determined based on a delay of the signal, and the delay of the signal may be determined based on the phase delay of the signal.

For example, S302 or S302' is performed in a first time period in which the first imaging apparatus receives or transmits the first imaging signal. The first time period may be determined based on a motion speed of the first imaging apparatus. For example, a length of the first time period may be inversely proportional to the motion speed of the first imaging apparatus, and a faster motion speed of the first imaging apparatus indicates a shorter first time period. For example, the first time period may be determined based on $\Delta t \times v = \lambda$. $\Delta t$ is the first time period, v is the motion speed of the first imaging apparatus, and $\lambda$ is an imaging signal wavelength. For example, if the motion speed of the first imaging apparatus is 10 meters per second (meters per second, m/s) and the imaging signal wavelength is 3 gigahertz (gigahertz, GHz), that is, 10 centimeters, the first time period is 0.01 second.

In a specific implementation process, S302 or S302' may be performed before the first imaging signal is received or transmitted, or may be performed when or after the first imaging signal is received or transmitted.

In some implementations, the auxiliary request information indicates location information of the first imaging apparatus and/or a first time-frequency resource that is used to transmit the auxiliary signal.

For example, the location information of the first imaging apparatus may be used to determine a planned motion path of the first imaging apparatus or a predicted motion path of the first imaging apparatus, where the planned motion path or the predicted motion path is a motion path of the first imaging apparatus in a future period of time. For example, the location information of the first imaging apparatus may include a plurality of location-speed-moment sequences, and each location-speed-moment sequence indicates a location and a speed of the first imaging apparatus at a moment. Further, the first auxiliary apparatus may determine the planned motion path or the predicted motion path by using an intent prediction algorithm. For example, the first imaging apparatus is a vehicle, and the first auxiliary apparatus may determine the planned motion path or the predicted motion path based on a plurality of location-moment sequences and semantic information. The semantic information may include information such as a road structure, a traffic rule, and a traffic signal light state.

Based on the planned motion path or the predicted motion path of the first imaging apparatus, the first auxiliary apparatus may determine whether the first auxiliary apparatus can maintain direct line of sight (line of sight, LOS) coverage on the first imaging apparatus, and further determine whether to participate in assisting the first imaging apparatus in imaging. For example, if the first auxiliary apparatus determines that the first auxiliary apparatus can maintain LOS coverage on the first imaging apparatus in the first time period, the first auxiliary apparatus may determine to participate in assisting the first imaging apparatus in imaging.

For example, the first time-frequency resource may also be used by an auxiliary apparatus to determine whether to participate in assisting the first imaging apparatus in imaging. For example, when the auxiliary apparatus cannot use the first time-frequency resource, the auxiliary apparatus may determine not to participate in assisting the first imaging apparatus in imaging.

In some scenarios, when the first auxiliary apparatus determines that the first auxiliary apparatus can maintain LOS coverage on the first imaging apparatus in the first time period, and the first auxiliary apparatus can use the first time-frequency resource, the first auxiliary apparatus may determine to participate in assisting the first imaging apparatus in imaging.

For example, the first time-frequency resource may include one or more time-frequency resources used to transmit the auxiliary signal. The first time-frequency resource may be defined by a time domain location and a frequency domain location. The time domain location may include at least one of a frame, a subframe, a slot, and a symbol, and the frequency domain location may include at least one of a bandwidth part (bandwidth part, BWP), a resource block (resource block, RB), and a resource element (resource element, RE). Alternatively, the first time-frequency resource may be a time-frequency resource in a predefined resource set.

For example, that the first auxiliary request information indicates the first time-frequency resource may include: The first auxiliary request information carries information about the first time-frequency resource, and the information about the first time-frequency resource may be, for example, information indicating the first time-frequency resource, such as an index of the first time-frequency resource.

For example, the first time-frequency resource is associated with the first time period. For example, the first imaging apparatus may determine a moment at which the first imaging apparatus receives or transmits the first imaging signal, and then determine the first time-frequency resource based on the first time period and the moment at which the first imaging apparatus receives or transmits the first imaging signal.

In some implementations, before S302 or S302' is performed, the first auxiliary apparatus further transmits second auxiliary response information to the first imaging apparatus, where the second auxiliary response information indicates at least one of the following: that the first auxiliary apparatus participates in assisting the first imaging apparatus in imaging, a location of the first auxiliary apparatus, or a second time-frequency resource used to transmit the auxiliary signal.

For example, the first time-frequency resource may include the second time-frequency resource, that is, the second time-frequency resource is a time-frequency resource in one or more time-frequency resources that are included in the first time-frequency resource and that are used to transmit the auxiliary signal.

For example, in auxiliary response information from an auxiliary apparatus, a 1-bit field may indicate whether to participate in assisting the first imaging apparatus in imaging. For example, when the 1-bit field is set to 1, it indicates that the auxiliary apparatus participates in assisting the first imaging apparatus in imaging, and when the 1-bit field is set to 0, it indicates that the auxiliary apparatus does not participate in assisting the first imaging apparatus in imaging. That the second auxiliary response information indicates that the first auxiliary apparatus participates in assisting the first imaging apparatus in imaging may include: setting a 1-bit field indicating whether to participate in assisting the first imaging apparatus in imaging to 1.

In a specific implementation process, that the second auxiliary response information indicates that the first auxiliary apparatus participates in assisting the first imaging apparatus in imaging may alternatively be an implicit indication. For example, when the second auxiliary response information indicates the location of the first auxiliary apparatus, or the second auxiliary response information indicates the location of the first auxiliary apparatus and the second time-frequency resource, it is determined that the first auxiliary apparatus participates in assisting the first imaging apparatus in imaging.

For example, that the second auxiliary response information indicates the location of the first auxiliary apparatus may include: The second auxiliary response information carries the location of the first auxiliary apparatus; or the second auxiliary response information carries a location index, and the location index indicates the location of the first auxiliary apparatus or indicates a fixed motion path of the first auxiliary apparatus. The first imaging apparatus may determine the location of the first auxiliary apparatus based on the location index. For example, the location index may be an identifier (identifier, ID) of the first auxiliary apparatus, or the location index may be in another form.

For example, the location of the first auxiliary apparatus may be a precise location of the first auxiliary apparatus. For example, the location of the first auxiliary apparatus may be precise to 0.01 to 0.0125 of the imaging signal wavelength.

In a specific implementation process, if the first time-frequency resource includes information about only one time-frequency resource, and the time-frequency resource is a time-frequency resource available to the first auxiliary apparatus, the second auxiliary response information may not indicate the second time-frequency resource used to transmit the auxiliary signal, or the second auxiliary response information implicitly indicates the second time-frequency resource. For example, when the second auxiliary response information indicates the location of the first auxiliary apparatus, it is determined that the first auxiliary apparatus participates in assisting the first imaging apparatus in imaging, and the first auxiliary apparatus receives or transmits the auxiliary signal by using the first time-frequency resource.

In some implementations, before S302 or S302' is performed, the first imaging apparatus further receives third auxiliary response information, where the third auxiliary response information indicates that a third auxiliary apparatus participates in assisting the first imaging apparatus in imaging. A distance between the first auxiliary apparatus and an imaging area corresponding to the first imaging signal is shorter than a distance between the third auxiliary apparatus and the imaging area, and the one or more auxiliary apparatuses include the third auxiliary apparatus.

For example, the first imaging apparatus may determine, based on the location that is of the first auxiliary apparatus and that is indicated by the second auxiliary response information and a location that is of the third auxiliary apparatus and that is indicated by the third auxiliary response information, that the first auxiliary apparatus is closer to the imaging area than the third auxiliary apparatus. Further, the first imaging apparatus determines that the first auxiliary apparatus that is closer to the imaging area participates in assisting in imaging. A shorter distance between the auxiliary apparatus and the imaging area indicates more similar impact of motion of the first imaging apparatus on the imaging signal and a phase delay of the auxiliary signal. In this way, an imaging result is more accurately compensated or corrected based on the auxiliary signal.

In some implementations, the first imaging apparatus further receives first auxiliary response information from a second auxiliary apparatus, where the first auxiliary response information indicates that the second auxiliary apparatus participates in assisting the first imaging apparatus in imaging, or the first auxiliary response information indicates that the second auxiliary apparatus does not participate in assisting the first imaging apparatus in imaging, and the one or more auxiliary apparatuses include the second auxiliary apparatus.

For example, the second auxiliary apparatus and the third auxiliary apparatus may be a same apparatus, and the first auxiliary response information and the third auxiliary response information are same information.

In a specific implementation process, if an auxiliary apparatus receives the auxiliary request information from the first imaging apparatus and determines not to participate in assistance, the auxiliary apparatus may not transmit, to the first imaging apparatus, auxiliary response information indicating that the auxiliary apparatus does not participate in assisting the first imaging apparatus in imaging. Further, after the first imaging apparatus transmits the auxiliary request information, if no auxiliary response information from the auxiliary apparatus is received within preset duration, it may be determined that the auxiliary apparatus does not participate in assistance. For example, the preset duration may be 3 seconds, 5 seconds, or other duration.

In some implementations, the first auxiliary apparatus further receives second auxiliary request information, where the second auxiliary request information is used to request the first auxiliary apparatus to assist a third imaging apparatus in imaging; and the first auxiliary apparatus transmits fourth auxiliary response information to the third imaging apparatus, where the fourth auxiliary response information indicates that the first auxiliary apparatus participates in assisting the third imaging apparatus in imaging, or the fourth auxiliary response information indicates that the first auxiliary apparatus does not participate in assisting the third imaging apparatus in imaging.

In some implementations, the first imaging apparatus is configured to transmit the first imaging signal, and a second imaging apparatus is configured to receive an echo of the first imaging signal.

After S302 is performed, the first imaging apparatus transmits first auxiliary information to the second imaging apparatus, where the first auxiliary information indicates a delay and/or a phase delay of the auxiliary signal.

For example, a location of the second imaging apparatus may be fixed.

In some implementations, after S302' is performed, the first auxiliary apparatus transmits second auxiliary information to the first imaging apparatus, where the second auxiliary information indicates a delay and/or a phase delay of the auxiliary signal.

In some implementations, the first imaging apparatus is configured to transmit the first imaging signal, and the second imaging apparatus is configured to receive the echo of the first imaging signal. After S302' is performed, the first auxiliary apparatus transmits third auxiliary information to the second imaging apparatus, where the third auxiliary information indicates a delay and/or a phase delay of the auxiliary signal. In this way, when performing imaging based on the echo of the first imaging signal, the second imaging apparatus may perform phase compensation on the echo of the first imaging signal based on the third auxiliary information, or may correct the location of the first imaging apparatus based on the third auxiliary information, to implement phase compensation on the echo of the first imaging signal, thereby helping improve a focusing degree of imaging.

According to the imaging method provided in this embodiment of this application, when a dominant scatter cannot be obtained in an imaging scene, or a scatter point with a maximum amplitude cannot be obtained in an imaging scene as a dominant scatter, phase compensation may still be performed on an echo based on an auxiliary signal, or a location of an imaging apparatus may be corrected based on the auxiliary signal, thereby improving a focusing degree of an image. The following describes, with reference to FIG. 4 to FIG. 6, a specific implementation of determining auxiliary information based on an auxiliary signal and assisting imaging of the first imaging signal based on the auxiliary information.

In some possible implementations, after receiving the auxiliary signal, the first imaging apparatus performs the method shown in FIG. 4 to obtain the auxiliary information, or after receiving the auxiliary signal, the first auxiliary apparatus performs the method shown in FIG. 4 to obtain the auxiliary information. The auxiliary information may be any one of the first auxiliary information, the second auxiliary information, and the third auxiliary information in the method 300.

In an implementation, as shown in (a) in FIG. 4, the first imaging apparatus or the first auxiliary apparatus performs S303 and S304 to obtain the auxiliary information.

S303: Perform pulse compression on the received auxiliary signal to obtain a pulse compression result.

For example, the auxiliary signal includes but is not limited to a single tone (single tone) signal, a dual tone (dual tone) signal, a multicarrier (multicarrier) signal, and a frequency modulated continuous wave (frequency modulated continuous wave, FMCW) signal.

The pulse compression result may be a complex sequence.

S304: Determine the auxiliary information based on information at an amplitude peak of the pulse compression result.

Generally, a time domain location of the amplitude peak in the pulse compression result can reflect a delay of an auxiliary signal received by a receiver relative to the auxiliary signal transmitted by a transmitter, and a phase at the amplitude peak can reflect a phase delay of the auxiliary signal received by the receiver relative to the auxiliary signal transmitted by the transmitter.

In still another implementation, as shown in (b) in FIG. 4, the first imaging apparatus or the first auxiliary apparatus performs S303' and S304' to obtain the auxiliary information, where the auxiliary information may be any one of the first auxiliary information, the second auxiliary information, and the third auxiliary information in the method 300.

S303': Perform Fourier transform on the received auxiliary signal to obtain a Fourier transform result.

For example, the Fourier transform result may also be a complex sequence.

S304': Determine the auxiliary information based on phases corresponding to one or more frequencies in the Fourier transform result.

It may be understood that a phase corresponding to each of the one or more frequencies may reflect a phase delay of an auxiliary signal received by a receiver relative to the auxiliary signal transmitted by a transmitter.

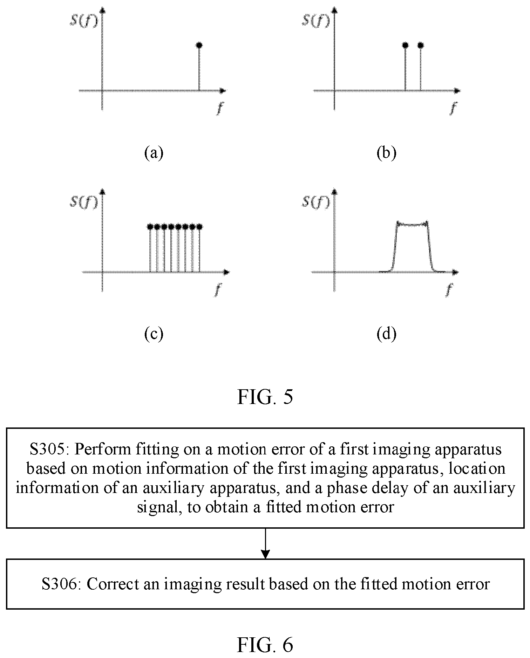

When the auxiliary information is determined by using Fourier transform, content of the auxiliary information is related to a form of the auxiliary signal. For example, (a) to (d) in FIG. 5 show power spectrums of a single tone signal, a dual tone signal, a multicarrier signal, and an FMCW signal respectively, where a horizontal coordinate f is a frequency, and a vertical coordinate S(f) is signal power. The multicarrier signal may be, for example, an orthogonal frequency division multiplexing (orthogonal frequency division multiplexing, OFDM) signal or discrete Fourier transform-spread-orthogonal frequency division multiplexing (discrete flourier transform-spread-orthogonal frequency division multiplexing, DFT-s-OFDM) signal. When the auxiliary information is determined by using Fourier transform, frequency components of different signals are different, and each signal corresponds to one phase. If the auxiliary signal is the single tone signal, the auxiliary information may include a value of only one phase. If the auxiliary signal is the dual tone signal, the auxiliary information may include values of two phases, which respectively correspond to two subcarriers. If the auxiliary signal is the multicarrier signal, the auxiliary information may include values of a plurality of phases, which respectively correspond to a plurality of subcarriers. If the auxiliary signal is the multicarrier signal, the auxiliary information may include the values of the plurality of phases, and a specific quantity of phases depends on a used Fourier transform size (Fourier transform size).

In some implementations, after obtaining the auxiliary information, the first imaging apparatus may perform imaging based on the auxiliary information. As shown in FIG. 6, the first imaging apparatus may perform S305 and S306 to perform imaging, to improve a focusing degree of an image.

S305: Perform fitting on the motion error of the first imaging apparatus based on motion information of the first imaging apparatus, location information of the auxiliary apparatus, and the phase delay of the auxiliary signal, to obtain a fitted motion error.

For example, the motion information of the first imaging apparatus indicates an actual traveling path of the first imaging apparatus. The motion error of the first imaging apparatus may be fitted based on the motion information of the first imaging apparatus, the location information of the auxiliary apparatus, and the phase delay of the auxiliary signal by using a quantization search method. Details are as follows:

(1) Modeling: Establish a mathematical model between the motion error of the first imaging apparatus and the phase delay of the auxiliary signal based on the motion information of the first imaging apparatus and the location information of the auxiliary apparatus. It is assumed that an accurate spatial location coordinate of the first imaging apparatus at a moment t is x(t), y(t), z(t), and a spatial location coordinate of the auxiliary apparatus is $x_0, y_0, z_0$. In this case, a distance at which the signal is propagated from the first imaging apparatus to the auxiliary apparatus or from the auxiliary apparatus to the first imaging apparatus is d(t) = $\sqrt{(x(t) - x_0)^2 + (y(t) - y_0)^2 + (z(t) - z_0)^2}$, and a corresponding signal propagation delay is $\tau(t) = d(t)/c$, where c is a propagation speed of an electromagnetic wave. It is assumed that a frequency component corresponding to a phase delay $\Delta\phi_k$ included in the auxiliary information is $f_k$, and a relationship between the frequency component $f_k$ and a delay $\tau$ is $\Delta\phi_k = f_k\tau(t)$. When the first imaging apparatus has the motion error, a spatial location of the first imaging apparatus may be represented as a sum of the motion information of the first imaging apparatus (which may be recorded by a sensor installed on the first imaging apparatus) and the motion error, that is, x(t) = $\overline{x}(t) + \Delta x(t)$, y(t) = $\overline{y}(t) + \Delta y(t)$, z(t) = $\overline{z}(t) + \Delta z(t)$, where $\overline{x}(t)$, $\overline{y}(t)$, $\overline{z}(t)$ is a spatial coordinate that is of the first imaging apparatus and that is included in the motion information, and $\Delta x(t), \Delta y(t), \Delta z(t)$ is an offset of the spatial coordinate of the first imaging apparatus corresponding to the motion error. It can be learned that the motion error of the first imaging apparatus causes a change of the delay of the auxiliary signal, and therefore causes a change of the phase of the auxiliary signal. Therefore, the motion error of the first imaging apparatus may be estimated based on the phase of the auxiliary signal. The motion error of the first imaging apparatus may be estimated at each moment. The following steps are described only for the moment t.

(2) Quantization: Quantize the motion error of the first imaging apparatus, that is, discretize potential possible values of $\Delta x(t), \Delta y(t), \Delta z(t)$, for example, quantize coordinates within a range of $\pm 10$ cm by using a step of 1 cm, that is, a value range of $\Delta x(t), \Delta y(t), \Delta z(t)$ is -10 cm, -9 cm, ..., 0 cm, ..., +9 cm, +10 cm. Therefore, there are 21*21*21=9261 potential values of the motion error.

(3) Search: Correct the motion information of the first imaging apparatus by using each potential value of the motion error, to obtain an estimated spatial location of the first imaging apparatus, calculate a corresponding signal propagation distance and a signal propagation delay, calculate phase delays $\hat{\Delta\phi}_k$ corresponding to different frequencies $f_k$ of the auxiliary signal, and calculate a root mean square error between the phase delays and the phase delay included in the auxiliary information.

(4) Output: Output a motion error corresponding to a minimum root mean square error as an estimation result of the motion error of the first imaging apparatus.

It should be understood that the foregoing quantization search method is merely an example for description. In a specific implementation process, the motion error of the first imaging apparatus may be fitted by using another method, for example, a method for estimating a motion state based on Kalman filtering.

For example, the motion information of the first imaging apparatus may be determined based on information sensed by the sensor of the first imaging apparatus, and the sensor of the first imaging apparatus includes but is not limited to a global positioning system (global positioning system, GPS), an inertial measurement unit (inertial measurement unit, IMU), a lidar, a millimeter-wave radar, an ultrasonic radar, and a camera apparatus.

S306: Correct an imaging result based on the fitted motion error.

In an implementation, phase compensation is performed on the first imaging signal based on the fitted motion error, to improve a focusing degree of an image.

In another implementation, the location of the first imaging apparatus is corrected based on the fitted motion error, and imaging is further performed based on the first imaging signal and the corrected location.

The foregoing describes the imaging method based on the auxiliary information. In actual implementation, imaging may alternatively be performed based on the auxiliary signal.

In some implementations, the first imaging apparatus may use an auxiliary apparatus as an active scatter point, and after receiving the auxiliary signal transmitted by the auxiliary apparatus, the first imaging apparatus may obtain, by using a conventional imaging algorithm (for example, a back projection algorithm, Back Projection Algorithm, BP), an image including the auxiliary apparatus. The auxiliary apparatus actively transmits a signal, strength of an image point or an area corresponding to the auxiliary apparatus in the image is far greater than that of a passive scatter point in an environment, that is, the auxiliary apparatus is represented as a typical dominant scatter in the image. Therefore, the first imaging apparatus may perform imaging based on the dominant scatter formed by the auxiliary apparatus by using an image focusing algorithm.

Further, the first imaging apparatus may perform imaging by using the image focusing algorithm. The following uses a phase gradient autofocus (phase gradient autofocus, PGA) algorithm as an example to describe a process of correcting a synthetic aperture radar (synthetic aperture radar, SAR) image based on a dominant scatter. Details are as follows:

(1) Circular shift: Determine a distance unit including a dominant scatter, perform azimuthal Fourier transform on the distance unit to obtain an azimuth dimension image, perform circular shift on the dominant scatter to a center of the image, and remove a Doppler center frequency of the dominant scatter.

For example, the SAR image may be generated based on the first imaging signal or the echo of the first imaging signal.

(2) Windowing: Perform windowing on circularly shifted image domain data to improve a signal-to-noise ratio, reduce impact of background clutter, and improve accuracy of phase error estimation. A width of windowing may be determined based on a blurring degree of the SAR image.

(3) Phase gradient estimation: Perform inverse azimuthal Fourier transform on the windowed image domain data, and then calculate a phase error gradient $\Delta\hat{\emptyset}_c(n)$ between two phase points:

$$\Delta\widehat{\emptyset}_c(n) = \frac{\sum_m Im\{s_r^m(n)d(n)\}}{\sum_m |s_r(n)|^2}.$$

$s_r(n)$ is inverse Fourier transform of a windowed signal, and $d(n)=s_r(n+1) - s_r(n)$. A total phase error may be obtained by adding phase error gradients of all phase points.

(4) Iterative phase correction: Compensate the SAR distance domain data by using the phase error, perform Fourier transform on the compensated data to an image domain for next iteration, and repeatedly iterate for a plurality of times, for example, 4 to 6 times, to implement image focusing. It should be understood that the foregoing PGA implementation procedure is merely an example for description. In a specific implementation process, focusing processing may also be performed on an image by using another focusing algorithm based on the dominant scatter constructed based on the auxiliary signal in this application.

FIG. 7 to FIG. 10 show several application scenarios of an imaging method according to embodiments of this application. An imaging apparatus 1 may be understood as an example of the first imaging apparatus, an auxiliary apparatus 1 may be understood as an example of the first auxiliary apparatus, and an imaging apparatus 2 may be understood as an example of the second imaging apparatus.

FIG. 7 shows a schematic flowchart of an imaging method 400 according to an embodiment of this application. In some scenarios, the method 400 may be performed by the imaging apparatus 1 and the auxiliary apparatus 1, and the imaging apparatus 1 includes an imaging signal receiver. In some other scenarios, the method 400 may be performed by the imaging apparatus 1, the imaging apparatus 2, and the auxiliary apparatus 1, the imaging apparatus 1 includes an imaging signal receiver, and the imaging apparatus 2 includes an imaging signal transmitter. The method 400 may include S401 to S405.

S401: The imaging apparatus 1 transmits auxiliary request information to the auxiliary apparatus 1.

The auxiliary request information may be understood as an example of the first auxiliary request information in the method 300.

S402: The imaging apparatus 1 receives auxiliary response information from the auxiliary apparatus 1.

The auxiliary response information may be understood as an example of the second auxiliary response information in the method 300.

S403: The imaging apparatus 1 receives an auxiliary signal from the auxiliary apparatus 1.

In some implementations, S402 may be skipped, and S403 is directly performed. For example, when S402 is skipped and S403 is directly performed, the auxiliary signal may carry an identifier or location information of the auxiliary apparatus 1, so that the imaging apparatus 1 can determine a location of the auxiliary apparatus 1.

S404: The imaging apparatus 1 receives an imaging signal 1.

For example, the auxiliary signal may be an example of the auxiliary signal in the method 300, and the imaging signal 1 may be an example of the first imaging signal in the method 300. For an occasion on which the imaging apparatus 1 receives the auxiliary signal and an occasion on which the imaging apparatus 1 receives the imaging signal 1, refer to the descriptions in the method 300. Details are not described herein again.

In some implementations, the method 400 further includes S404' in which the imaging apparatus 2 transmits an imaging signal 2. The imaging signal 1 is an echo formed by reflecting the imaging signal 2 by an imaging object.

S405: Perform imaging based on the auxiliary signal and the imaging signal 1.

For example, performing imaging based on the auxiliary signal and the imaging signal 1 includes: constructing a dominant scatter based on the auxiliary signal, and correcting an imaging result of the imaging signal 1 based on the constructed dominant scatter to obtain final imaging; or determining a phase delay or a delay of the auxiliary signal, determining a motion error of the imaging apparatus 1 based on the phase delay or the delay of the auxiliary signal, and performing phase compensation on the imaging signal 1 based on the motion error of the imaging apparatus 1 to obtain final imaging; or correcting a location of the imaging apparatus 1 based on the motion error of the imaging apparatus 1, and performing imaging based on the imaging apparatus 1 whose location is corrected and the imaging signal 1. For a specific implementation of performing imaging based on the auxiliary signal and the imaging signal 1, refer to the descriptions in the foregoing embodiment. Details are not described herein again.

Generally, a scale of an antenna array of a moving imaging apparatus (for example, the imaging apparatus 1) is smaller than a scale of an antenna array of a stationary imaging apparatus (for example, the imaging apparatus 2). Therefore, when the moving imaging apparatus transmits an imaging signal, and the stationary imaging apparatus receives an echo of the imaging signal, the stationary imaging apparatus can receive the echo of the imaging signal in single reception without time-frequency multiplexing, thereby helping reduce resource waste caused by time-frequency multiplexing. In addition, when the auxiliary signal is transmitted by the auxiliary apparatus, the auxiliary apparatus may transmit the auxiliary signal to the imaging apparatus when receiving the auxiliary request information and determining to participate in assisting in imaging, and does not need to transmit auxiliary response information to the imaging apparatus, thereby helping reduce signaling overheads in an assisted imaging process.

FIG. 8 shows a schematic flowchart of an imaging method 500 according to an embodiment of this application. The method 500 may be performed by an imaging apparatus 1, an imaging apparatus 2, and an auxiliary apparatus 1, the imaging apparatus 1 includes an imaging signal transmitter, and the imaging apparatus 2 includes an imaging signal receiver. The method 500 may include S501 to S508. S501 to S503 are similar to S401 to S403, and details are not described herein again.

S504: The imaging apparatus 1 transmits an imaging signal 1.

For example, the imaging signal 1 may be an example of the first imaging signal in the method 300. For an occasion on which the imaging apparatus 1 receives the auxiliary signal and an occasion on which the imaging apparatus 1 transmits the imaging signal 1, refer to the descriptions in the method 300. Details are not described herein again.

S505: The imaging apparatus 2 receives an imaging signal 2.

The imaging signal 2 is an echo of the imaging signal 1.

S506: The imaging apparatus 1 determines auxiliary information based on the auxiliary signal. For a method for determining the auxiliary information by the imaging apparatus 1, refer to the descriptions in S303 and S304 or S303' and S304'. Details are not described herein again.

S507: The imaging apparatus 1 transmits the auxiliary information to the imaging apparatus 2. For example, the auxiliary information may be an example of the first auxiliary information in the method 300.

S508: The imaging apparatus 2 performs imaging based on the auxiliary information and the imaging signal 2.

For a method for performing imaging by the imaging apparatus 2 based on the auxiliary information and the imaging signal 2, refer to the descriptions in S305 and S306. Details are not described herein again.

As described above, a scale of an antenna array of a moving imaging apparatus (for example, the imaging apparatus 1) is generally smaller than a scale of an antenna array of a stationary imaging apparatus (for example, the imaging apparatus 2). Therefore, signal power of an imaging signal transmitted by the stationary imaging apparatus is larger, and signal power of an echo of the imaging signal received by the moving imaging apparatus is also larger, thereby helping reduce difficulty in subsequent imaging processing.

FIG. 9 shows a schematic flowchart of an imaging method 600 according to an embodiment of this application. In some scenarios, the method 600 may be performed by an imaging apparatus 1 and an auxiliary apparatus 1, and the imaging apparatus 1 includes an imaging signal receiver. In some other scenarios, the method 600 may be performed by an imaging apparatus 1, an imaging apparatus 2, and an auxiliary apparatus 1, the imaging apparatus 1 includes an imaging signal receiver, and the imaging apparatus 2 includes an imaging signal transmitter. The method 600 may include S601 to S607. S601 and S602 are similar to S401 and S402, and details are not described herein again.

S603: The imaging apparatus 1 transmits an auxiliary signal to the auxiliary apparatus 1.

S604: The imaging apparatus 1 receives an imaging signal 1.

For example, the auxiliary signal may be an example of the auxiliary signal in the method 300, and the imaging signal 1 may be an example of the first imaging signal in the method 300. For an occasion on which the imaging apparatus 1 transmits the auxiliary signal and an occasion on which the imaging apparatus 1 receives the imaging signal 1, refer to the descriptions in the method 300. Details are not described herein again.

In some implementations, the method 600 further includes S604' in which the imaging apparatus 2 transmits an imaging signal 2. The imaging signal 1 is an echo of the imaging signal 2.

S605: The auxiliary apparatus 1 determines auxiliary information based on the auxiliary signal. For a method for determining the auxiliary information by the auxiliary apparatus 1, refer to the descriptions in S303 and S304 or S303' and S304'. Details are not described herein again.

S606: The imaging apparatus 1 receives the auxiliary information from the auxiliary apparatus. For example, the auxiliary information may be an example of the second auxiliary information in the method 300.

S607: The imaging apparatus 1 performs imaging based on the auxiliary information and the imaging signal 1.

For a method for performing imaging by the imaging apparatus 1 based on the auxiliary information and the imaging signal 1, refer to the descriptions in S305 and S306. Details are not described herein again.

When the auxiliary signal is transmitted by the imaging apparatus 1, and the imaging signal 1 is received by the imaging apparatus 1, it is easier for the imaging apparatus to control an occasion of transmitting the auxiliary signal.

FIG. 10 shows a schematic flowchart of an imaging method 700 according to an embodiment of this application. The method 700 may be performed by an imaging apparatus 1, an imaging apparatus 2, and an auxiliary apparatus 1, the imaging apparatus 1 includes an imaging signal transmitter, and the imaging apparatus 2 includes an imaging signal receiver. The method 700 may include 7501 to S708. S701 to S703 are similar to S601 to S603, and details are not described herein again.

S704: The imaging apparatus 1 transmits an imaging signal 1.

For example, the auxiliary signal may be an example of the auxiliary signal in the method 300, and the imaging signal 1 may be an example of the first imaging signal in the method 300. For an occasion on which the imaging apparatus 1 transmits the auxiliary signal and an occasion on which the imaging apparatus 1 transmits the imaging signal 1, refer to the descriptions in the method 300. Details are not described herein again.

S705: The imaging apparatus 2 receives an imaging signal 2.

The imaging signal 2 is an echo of the imaging signal 1.

S706: The auxiliary apparatus 1 determines auxiliary information based on the auxiliary signal. For a method for determining the auxiliary information by the auxiliary apparatus 1, refer to the descriptions in S303 and S304 or S303' and S304'. Details are not described herein again.

S707: The auxiliary apparatus 1 transmits the auxiliary information to the imaging apparatus 2. For example, the auxiliary information may be an example of the third auxiliary information in the method 300.

S708: The imaging apparatus 2 performs imaging based on the auxiliary information and the imaging signal 2.

For a method for performing imaging by the imaging apparatus 2 based on the auxiliary information and the imaging signal 1, refer to the descriptions in S305 and S306. Details are not described herein again.

When both the auxiliary signal and the imaging signal 1 are transmitted by the imaging apparatus 1, it is easier for the imaging apparatus to control an occasion of transmitting the auxiliary signal. For beneficial effect that is not described in detail in FIG. 9 and FIG. 10, refer to the descriptions in the foregoing embodiments. Details are not described herein again.

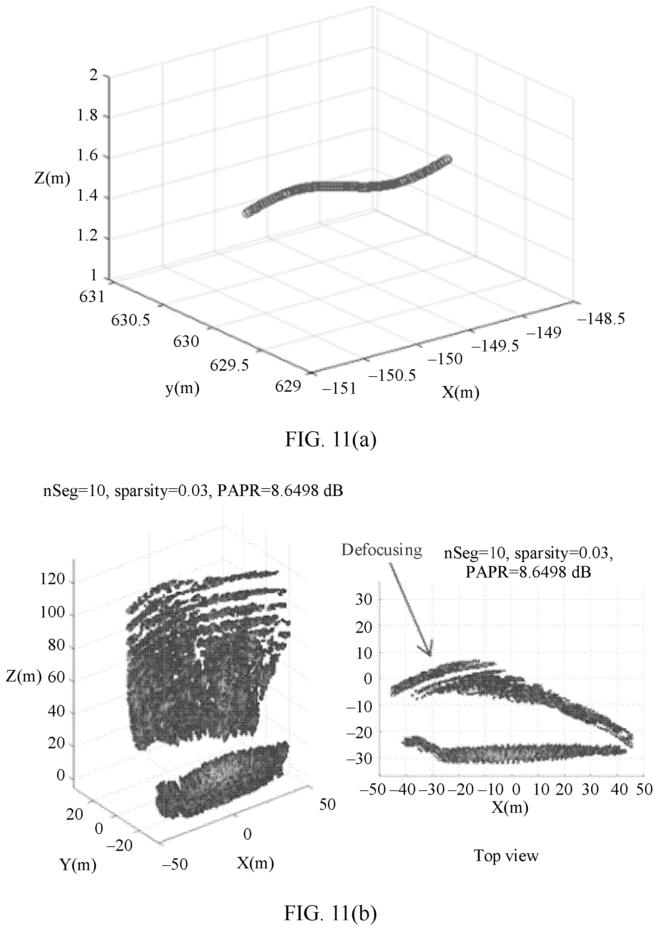

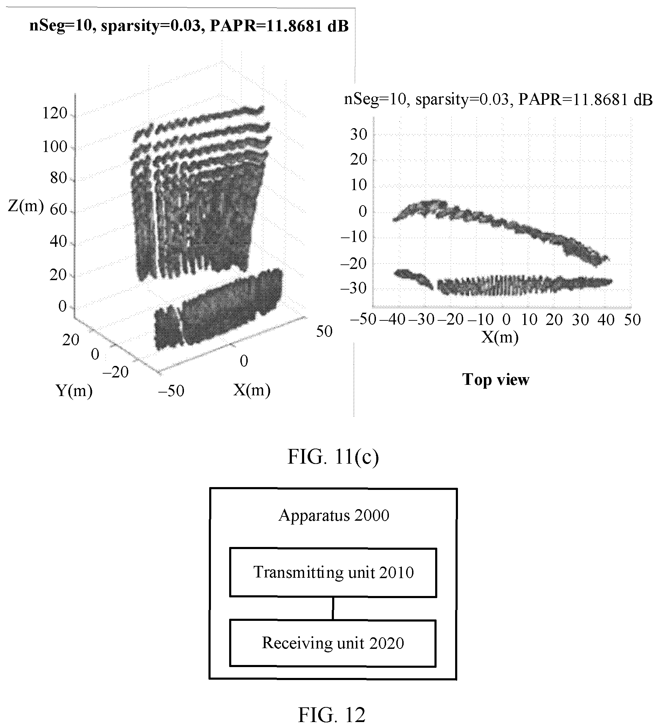

Based on the method 300, the method 400, the method 500, the method 600, and the method 700, a focusing degree of an image can be improved. For example, FIG. 11(a), FIG. 11(b), and FIG. 11(c) show a comparison between imaging results obtained by not using a method in this application and imaging results obtained by using a method in this application.

FIG. 11(a) shows a motion path of an imaging apparatus including an imaging signal transmitter (Tx). The motion path includes a motion error of the imaging apparatus, and the motion error of the imaging apparatus may cause a location error of 5 centimeters at an antenna phase center. FIG. 11(b) is a result of imaging directly performed by using an echo of an imaging signal, and FIG. 11(c) is a result of imaging performed after phase compensation is performed on an echo of an imaging signal by using an auxiliary signal. It can be learned from a comparison between FIG. 11(b) and FIG. 11(c) that a peak-to-average power ratio (peak to average power ratio, PAPR) of an image generated by using the method in this application is significantly higher than a peak-to-average power ratio of an image generated by not using the method in this application. In other words, a focusing degree of the image is significantly improved. In addition, image distortion caused by defocusing occurs in the image generated by not using the method in this application, and a distortion problem in the image generated by using the method in this application is significantly improved.

In embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

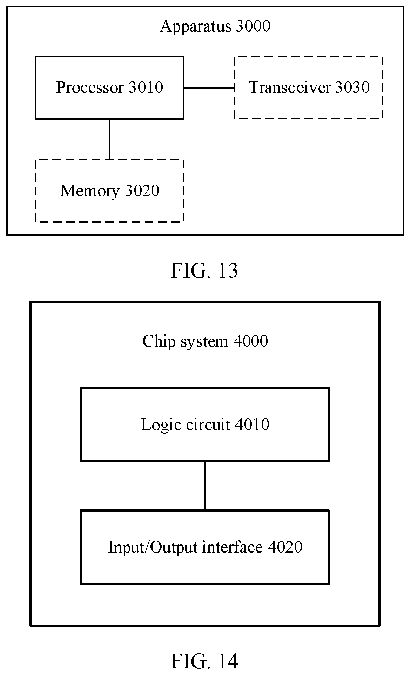

The foregoing describes in detail the imaging methods provided in embodiments of this application with reference to FIG. 1 to FIG. 11(a), FIG. 11(b), and FIG. 11(c). The following describes in detail imaging apparatuses provided in embodiments of this application with reference to FIG. 12 and FIG. 13. It should be understood that descriptions of apparatus embodiments correspond to descriptions of method embodiments. Therefore, for content that is not described in detail, refer to the foregoing method embodiments. For brevity, details are not described herein again.

FIG. 12 is a block diagram of an imaging apparatus 2000 according to an embodiment of this application. The apparatus 2000 may include units configured to perform operations performed by the first imaging apparatus or the first auxiliary apparatus in the method 300. In addition, the units in the apparatus 2000 are respectively used to implement corresponding procedures in the foregoing method embodiments.

Specifically, the apparatus 2000 includes a transmitting unit 2010 and a receiving unit 2020.

When the apparatus 2000 is configured to perform operations performed by the first imaging apparatus, the transmitting unit 2010 is configured to transmit auxiliary request information, where the auxiliary request information is used to request one or more auxiliary apparatuses to assist the first imaging apparatus in imaging; and the receiving unit 2020 is configured to receive an auxiliary signal from a first auxiliary apparatus. Alternatively, the transmitting unit 2010 is further configured to transmit an auxiliary signal to the first auxiliary apparatus, where the auxiliary signal and a first imaging signal received or transmitted by the first imaging apparatus are jointly used for imaging, and the one or more auxiliary apparatuses include the first auxiliary apparatus.

In some possible implementations, the auxiliary request information indicates at least one of the following: location information of the first imaging apparatus or a first time-frequency resource that is used to transmit the auxiliary signal.

In some possible implementations, the receiving unit 2020 is further configured to: receive first auxiliary response information from a second auxiliary apparatus, where the first auxiliary response information indicates that the second auxiliary apparatus participates in assisting the first imaging apparatus in imaging; or the first auxiliary response information indicates that the second auxiliary apparatus does not participate in assisting the first imaging apparatus in imaging, and the one or more auxiliary apparatuses include the second auxiliary apparatus.

In some possible implementations, the receiving unit 2020 is further configured to receive second auxiliary response information from the first auxiliary apparatus, where the second auxiliary response information indicates at least one of the following: that the first auxiliary apparatus participates in assisting the first imaging apparatus in imaging, a location of the first auxiliary apparatus, or a second time-frequency resource used to transmit the auxiliary signal.

In some possible implementations, the receiving unit 2020 is further configured to receive third auxiliary response information, where the third auxiliary response information indicates that a third auxiliary apparatus participates in assisting the first imaging apparatus in imaging, a distance between the first auxiliary apparatus and an imaging area corresponding to the first imaging signal is shorter than a distance between the third auxiliary apparatus and the imaging area, and the one or more auxiliary apparatuses include the third auxiliary apparatus.

In some possible implementations, the first imaging apparatus is configured to transmit the first imaging signal, a second imaging apparatus is configured to receive an echo of the first imaging signal, and the transmitting unit 2010 is further configured to transmit first auxiliary information to the second imaging apparatus, where the first auxiliary information indicates a delay and/or a phase delay of the auxiliary signal.

In some possible implementations, the receiving unit 2020 is further configured to receive second auxiliary information from the first auxiliary apparatus, where the second auxiliary information indicates a delay and/or a phase delay of the auxiliary signal.

When the apparatus 2000 is configured to perform operations performed by the first auxiliary apparatus, the receiving unit 2020 is configured to receive first auxiliary request information, where the first auxiliary request information is used to request the first auxiliary apparatus to assist a first imaging apparatus in imaging; and the transmitting unit 2010 is configured to transmit an auxiliary signal to the first imaging apparatus. Alternatively, the receiving unit 2020 is further configured to receive an auxiliary signal from the first imaging apparatus, where the auxiliary signal and a first imaging signal received or transmitted by the first imaging apparatus are jointly used for imaging.

In some possible implementations, the first auxiliary request information indicates at least one of the following: location information of the first imaging apparatus or a first time-frequency resource that is used to transmit the auxiliary signal.

In some possible implementations, the transmitting unit 2010 is further configured to transmit second auxiliary response information to the first imaging apparatus, where the second auxiliary response information indicates at least one of the following: that the first auxiliary apparatus participates in assisting the first imaging apparatus in imaging, a location of the first auxiliary apparatus, or a second time-frequency resource used to transmit the auxiliary signal.

In some possible implementations, the receiving unit 2020 is further configured to receive second auxiliary request information, where the second auxiliary request information is used to request the first auxiliary apparatus to assist a third imaging apparatus in imaging; and the transmitting unit 2010 is further configured to transmit fourth auxiliary response information to the third imaging apparatus, where the fourth auxiliary response information indicates that the first auxiliary apparatus participates in assisting the third imaging apparatus in imaging, or the fourth auxiliary response information indicates that the first auxiliary apparatus does not participate in assisting the third imaging apparatus in imaging.

In some possible implementations, the transmitting unit 2010 is further configured to transmit second auxiliary information to the first imaging apparatus, where the second auxiliary information indicates a delay and/or a phase delay of the auxiliary signal.

In some possible implementations, the first imaging apparatus is configured to transmit the first imaging signal, a second imaging apparatus is configured to receive an echo of the first imaging signal, and the transmitting unit 2010 is further configured to transmit third auxiliary information to the second imaging apparatus, where the third auxiliary information indicates a delay and/or a phase delay of the auxiliary signal.

In a specific implementation process, all or a part of the units in the foregoing apparatus may be integrated together, or may be implemented independently. In an implementation, these units are integrated together and implemented in a form of a system-on-a-chip (system-on-a-chip, SoC).

FIG. 13 is a diagram of a communication apparatus 3000 according to an embodiment of this application. The communication apparatus 3000 includes a processor 3010. The processor 3010 is configured to execute a computer program or instructions stored in a memory 3020, or read data or signaling stored in the memory 3020, to perform the methods in the foregoing method embodiments. Optionally, there are one or more processors 3010.

Optionally, as shown in FIG. 13, the communication apparatus 3000 further includes the memory 3020, and the memory 3020 is configured to store the computer program or the instructions and/or the data. The memory 3020 may be integrated with the processor 3010, or may be disposed separately. Optionally, there are one or more memories 3020.

Optionally, as shown in FIG. 13, the communication apparatus 3000 further includes a transceiver 3030, and the transceiver 3030 is configured to receive a signal and/or transmit a signal. For example, the processor 3010 is configured to control the transceiver 3030 to receive the signal and/or transmit the signal.

In a solution, the communication apparatus 3000 is configured to implement operations performed by the first imaging apparatus in the foregoing method embodiments.

For example, the processor 3010 is configured to execute the computer program or the instructions stored in the memory 3020, to implement related operations of the first imaging apparatus in the foregoing method embodiments.

In another solution, the communication apparatus 3000 is configured to implement operations performed by the first auxiliary apparatus in the foregoing method embodiments.

For example, the processor 3010 is configured to execute the computer program or the instructions stored in the memory 3020, to implement related operations of the first auxiliary apparatus in the foregoing method embodiments.

It should be understood that, the processor mentioned in this embodiment of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor. It should further be noted that the memory described herein is intended to include, but is not limited to, these memories and any other appropriate type of memory.

FIG. 14 is a diagram of a chip system 4000 according to an embodiment of this application. The chip system 4000 (or may be referred to as a processing system) includes a logic circuit 4010 and an input/output interface (input/output interface) 4020.

The logic circuit 4010 may be a processing circuit in the chip system 4000. The logic circuit 4010 may be coupled and connected to a storage unit, and invoke instructions in the storage unit, to enable the chip system 4000 to implement methods and functions in embodiments of this application. The input/output interface 4020 may be an input/output circuit in the chip system 4000, and output information processed by the chip system 4000, or input to-be-processed data or signaling information into the chip system 4000 for processing.

Specifically, for example, if the chip system 4000 is installed on a first imaging apparatus, the logic circuit 4010 is coupled to the input/output interface 4020, the logic circuit 4010 may receive an auxiliary signal through the input/output interface 4020, and the logic circuit 4010 processes the auxiliary signal to correct an imaging result. For another example, if the chip system 4000 is installed on a first auxiliary apparatus, the logic circuit 4010 is coupled to the input/output interface 4020, and the logic circuit 4010 may transmit an auxiliary signal through the input/output interface 4020, where the auxiliary signal is generated by the logic circuit 4010.

In a solution, the chip system 4000 is configured to implement operations performed by the first imaging apparatus in the foregoing method embodiments.

For example, the logic circuit 4010 is configured to implement processing-related operations performed by the first imaging apparatus in the foregoing method embodiments; and the input/output interface 4020 is configured to implement transmitting and/or receiving-related operations performed by the first imaging apparatus in the foregoing method embodiments.

In another solution, the chip system 4000 is configured to implement operations performed by the first auxiliary apparatus in the foregoing method embodiments.

For example, the logic circuit 4010 is configured to implement processing-related operations performed by the first auxiliary apparatus in the foregoing method embodiments; and the input/output interface 4020 is configured to implement transmitting and/or receiving-related operations performed by the first auxiliary apparatus in the foregoing method embodiments.

An embodiment of this application further provides a computer-readable storage medium. The computer-readable storage medium stores computer instructions for implementing the method performed by a device in the foregoing method embodiments.

For example, when the computer program is executed by a computer, the computer is enabled to implement the methods performed by the first imaging apparatus in the foregoing method embodiments.

For another example, when the computer program is executed by a computer, the computer is enabled to implement the methods performed by the first auxiliary apparatus in the foregoing method embodiments.

An embodiment of this application further provides a computer program product, including instructions. When the instructions are executed by a computer, the method executed by a device (for example, the first imaging apparatus or the first auxiliary apparatus) in the foregoing method embodiments is implemented.

An embodiment of this application further provides an imaging system, including the first imaging apparatus and the first auxiliary apparatus.

For explanations and beneficial effect of related content in any one of the apparatuses provided above, refer to a corresponding method embodiment provided above. Details are not described herein again.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and components may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network, for example, the internet interacting with other systems through the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the descriptions of embodiments of this application, "/" means "or" unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In embodiments of this application, prefix words such as "first" and "second" are used only to distinguish between different described objects, and do not limit locations, a sequence, priorities, quantities, content, or the like of the described objects. In embodiments of this application, the use of a prefix word such as an ordinal number for distinguishing between described objects does not constitute a limitation on the described objects. For descriptions of the described objects, refer to the descriptions of the context in claims or embodiments. The use of such a prefix word should not constitute a redundant limitation.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An imaging method, applied to a first imaging apparatus, wherein the method comprises:

   transmitting auxiliary request information, wherein the auxiliary request information is used to request one or more auxiliary apparatuses to assist the first imaging apparatus in imaging; and
   receiving an auxiliary signal from a first auxiliary apparatus, or transmitting an auxiliary signal to the first auxiliary apparatus, wherein the auxiliary signal and a first imaging signal received or transmitted by the first imaging apparatus are jointly used for imaging, and the one or more auxiliary apparatuses comprise the first auxiliary apparatus.

2. The method according to claim 1, wherein the auxiliary request information indicates at least one of the following: location information of the first imaging apparatus or a first time-frequency resource that is used to transmit the auxiliary signal.

3. The method according to claim 1 or 2, wherein the method further comprises:
receiving first auxiliary response information from a second auxiliary apparatus, wherein the first auxiliary response information indicates whether the second auxiliary apparatus participates in assisting the first imaging apparatus in imaging, and the one or more auxiliary apparatuses comprise the second auxiliary apparatus.

4. The method according to any one of claims 1 to 3, wherein the method further comprises:
receiving second auxiliary response information from the first auxiliary apparatus, wherein the second auxiliary response information indicates at least one of the following: that the first auxiliary apparatus participates in assisting the first imaging apparatus in imaging, a location of the first auxiliary apparatus, or a second time-frequency resource used to transmit the auxiliary signal.

5. The method according to claim 4, wherein the method further comprises:

receiving third auxiliary response information, wherein the third auxiliary response information indicates that a third auxiliary apparatus participates in assisting the first imaging apparatus in imaging; and
a distance between the first auxiliary apparatus and an imaging area corresponding to the first imaging signal is shorter than a distance between the third auxiliary apparatus and the imaging area, and the one or more auxiliary apparatuses comprise the third auxiliary apparatus.

6. The method according to any one of claims 1 to 5, wherein the first imaging apparatus is configured to transmit the first imaging signal, a second imaging apparatus is configured to receive an echo of the first imaging signal, and the method further comprises:
transmitting first auxiliary information to the second imaging apparatus, wherein the first auxiliary information indicates a delay and/or a phase delay of the auxiliary signal.

7. The method according to any one of claims 1 to 5, wherein the method further comprises:
receiving second auxiliary information from the first auxiliary apparatus, wherein the second auxiliary information indicates a delay and/or a phase delay of the auxiliary signal.

8. The method according to any one of claims 1 to 7, wherein the auxiliary signal is used to determine a motion error of the first imaging apparatus, and the motion error is used to correct an imaging result obtained based on the first imaging signal.

9. The method according to any one of claims 1 to 8, wherein that the auxiliary signal and the first imaging signal received or transmitted by the first imaging apparatus are jointly used for imaging comprises:

the phase delay of the auxiliary signal, motion information of the first imaging apparatus, and location information of the first auxiliary apparatus are used to determine the motion error of the first imaging apparatus, wherein the motion error of the first imaging apparatus is used to correct the imaging result obtained based on the first imaging signal.

10. An imaging method, applied to a first auxiliary apparatus, the method comprising:

receiving first auxiliary request information, wherein the first auxiliary request information is used to request the first auxiliary apparatus to assist a first imaging apparatus in imaging; and
transmitting an auxiliary signal to the first imaging apparatus, or receiving an auxiliary signal from the first imaging apparatus, wherein the auxiliary signal and a first imaging signal received or transmitted by the first imaging apparatus are jointly used for imaging.

11. The method according to claim 10, wherein the first auxiliary request information indicates at least one of the following: location information of the first imaging apparatus or a first time-frequency resource that is used to transmit the auxiliary signal.

12. The method according to claim 10 or 11, wherein the method further comprises:
transmitting second auxiliary response information to the first imaging apparatus, wherein the second auxiliary response information indicates at least one of the following: that the first auxiliary apparatus participates in assisting the first imaging apparatus in imaging, a location of the first auxiliary apparatus, or a second time-frequency resource used to transmit the auxiliary signal.

13. The method according to any one of claims 10 to 12, wherein the method further comprises:

receiving second auxiliary request information, wherein the second auxiliary request information is used to request the first auxiliary apparatus to assist a third imaging apparatus in imaging; and
transmitting fourth auxiliary response information to the third imaging apparatus, wherein the fourth auxiliary response information indicates whether the first auxiliary apparatus participates in assisting the third imaging apparatus in imaging.

14. The method according to any one of claims 10 to 13, wherein the method further comprises:
transmitting second auxiliary information to the first imaging apparatus, wherein the second auxiliary information indicates a delay and/or a phase delay of the auxiliary signal.

15. The method according to any one of claims 10 to 13, wherein the first imaging apparatus is configured to transmit the first imaging signal, a second imaging apparatus is configured to receive an echo of the first imaging signal, and the method further comprises:
transmitting third auxiliary information to the second imaging apparatus, wherein the third auxiliary information indicates a delay and/or a phase delay of the auxiliary signal.

16. The method according to any one of claims 10 to 15, wherein the auxiliary signal is used to determine a motion error of the first imaging apparatus, and the motion error is used to correct an imaging result obtained based on the first imaging signal.

17. The method according to any one of claims 10 to 16, wherein that the auxiliary signal and the first imaging signal received or transmitted by the first imaging apparatus are jointly used for imaging comprises:

the phase delay of the auxiliary signal, motion information of the first imaging apparatus, and location information of the first auxiliary apparatus are used to determine the motion error of the first imaging apparatus, wherein the motion error of the first imaging apparatus is used to correct the imaging result obtained based on the first imaging signal.

18. An imaging apparatus, wherein the apparatus comprises:

a transmitting unit, configured to transmit auxiliary request information, wherein the auxiliary request information is used to request one or more auxiliary apparatuses to assist a first imaging apparatus in imaging; and
a receiving unit, configured to receive an auxiliary signal from a first auxiliary apparatus; or
the transmitting unit is further configured to transmit an auxiliary signal to the first auxiliary apparatus, wherein the auxiliary signal and a first imaging signal received or transmitted by the first imaging apparatus are jointly used for imaging, and the one or more auxiliary apparatuses comprise the first auxiliary apparatus.

19. The apparatus according to claim 18, wherein the auxiliary request information indicates at least one of the following: location information of the first imaging apparatus or a first time-frequency resource that is used to transmit the auxiliary signal.

20. The apparatus according to claim 18 or 19, wherein the receiving unit is further configured to:
receive first auxiliary response information from a second auxiliary apparatus, wherein the first auxiliary response information indicates whether the second auxiliary apparatus participates in assisting the first imaging apparatus in imaging, and the one or more auxiliary apparatuses comprise the second auxiliary apparatus.

21. The apparatus according to any one of claims 18 to 20, wherein the receiving unit is further configured to:
receive second auxiliary response information from the first auxiliary apparatus, wherein the second auxiliary response information indicates at least one of the following: that the first auxiliary apparatus participates in assisting the first imaging apparatus in imaging, a location of the first auxiliary apparatus, or a second time-frequency resource used to transmit the auxiliary signal.

22. The apparatus according to claim 21, wherein the receiving unit is further configured to:

receive third auxiliary response information, wherein the third auxiliary response information indicates that a third auxiliary apparatus participates in assisting the first imaging apparatus in imaging; and
a distance between the first auxiliary apparatus and an imaging area corresponding to the first imaging signal is shorter than a distance between the third auxiliary apparatus and the imaging area, and the one or more auxiliary apparatuses comprise the third auxiliary apparatus.

23. The apparatus according to any one of claims 18 to 22, wherein the first imaging apparatus is configured to transmit the first imaging signal, a second imaging apparatus is configured to receive an echo of the first imaging signal, and the transmitting unit is further configured to:
transmit first auxiliary information to the second imaging apparatus, wherein the first auxiliary information indicates a delay and/or a phase delay of the auxiliary signal.

24. The apparatus according to any one of claims 18 to 22, wherein the receiving unit is further configured to:
receive second auxiliary information from the first auxiliary apparatus, wherein the second auxiliary information indicates a delay and/or a phase delay of the auxiliary signal.

25. The apparatus according to any one of claims 18 to 24, wherein the auxiliary signal is used to determine a motion error of the first imaging apparatus, and the motion error is used to correct an imaging result obtained based on the first imaging signal.

26. The apparatus according to any one of claims 18 to 25, wherein that the auxiliary signal and the first imaging signal received or transmitted by the first imaging apparatus are jointly used for imaging comprises:

the phase delay of the auxiliary signal, motion information of the first imaging apparatus, and location information of the first auxiliary apparatus are used to determine the motion error of the first imaging apparatus, wherein the motion error of the first imaging apparatus is used to correct the imaging result obtained based on the first imaging signal.

27. An imaging apparatus, wherein the apparatus comprises:

a receiving unit, configured to receive first auxiliary request information, wherein the first auxiliary request information is used to request a first auxiliary apparatus to assist a first imaging apparatus in imaging; and
a transmitting unit, configured to transmit an auxiliary signal to the first imaging apparatus; or
the receiving unit is further configured to receive an auxiliary signal from the first imaging apparatus, wherein the auxiliary signal and a first imaging signal received or transmitted by the first imaging apparatus are jointly used for imaging.

28. The apparatus according to claim 27, wherein the first auxiliary request information indicates at least one of the following: location information of the first imaging apparatus or a first time-frequency resource that is used to transmit the auxiliary signal.

29. The apparatus according to claim 27 or 28, wherein the transmitting unit is further configured to:
transmit second auxiliary response information to the first imaging apparatus, wherein the second auxiliary response information indicates at least one of the following: that the first auxiliary apparatus participates in assisting the first imaging apparatus in imaging, a location of the first auxiliary apparatus, or a second time-frequency resource used to transmit the auxiliary signal.

30. The apparatus according to any one of claims 27 to 29, wherein the receiving unit is further configured to:

receive second auxiliary request information, wherein the second auxiliary request information is used to request the first auxiliary apparatus to assist a third imaging apparatus in imaging; and
the transmitting unit is further configured to transmit fourth auxiliary response information to the third imaging apparatus, wherein the fourth auxiliary response information indicates whether the first auxiliary apparatus participates in assisting the third imaging apparatus in imaging.

31. The apparatus according to any one of claims 27 to 30, wherein the transmitting unit is further configured to:
transmit second auxiliary information to the first imaging apparatus, wherein the second auxiliary information indicates a delay and/or a phase delay of the auxiliary signal.

32. The apparatus according to any one of claims 27 to 30, wherein the first imaging apparatus is configured to transmit a first imaging signal, a second imaging apparatus is configured to receive an echo of the first imaging signal, and the transmitting unit is further configured to:
transmit third auxiliary information to the second imaging apparatus, wherein the third auxiliary information indicates a delay and/or a phase delay of the auxiliary signal.

33. The apparatus according to any one of claims 27 to 32, wherein the auxiliary signal is used to determine a motion error of the first imaging apparatus, and the motion error is used to correct an imaging result obtained based on the first imaging signal.

34. The apparatus according to any one of claims 27 to 33, wherein that the auxiliary signal and the first imaging signal received or transmitted by the first imaging apparatus are jointly used for imaging comprises:

the phase delay of the auxiliary signal, motion information of the first imaging apparatus, and location information of the first auxiliary apparatus are used to determine the motion error of the first imaging apparatus, wherein the motion error of the first imaging apparatus is used to correct the imaging result obtained based on the first imaging signal.

35. A communication apparatus, comprising:
a processor, configured to execute a computer program stored in a memory, to enable the apparatus to perform the method according to any one of claims 1 to 9, or enable the apparatus to perform the method according to any one of claims 10 to 17.

36. The apparatus according to claim 35, wherein the apparatus further comprises the memory.

37. An imaging system, wherein the system comprises the apparatus according to any one of claims 18 to 26 and the apparatus according to any one of claims 27 to 34.

38. The system according to claim 37, wherein the system further comprises another imaging apparatus, and the another imaging apparatus is configured to receive an echo of the first imaging signal; or the another imaging apparatus is configured to transmit a second imaging signal, wherein the first imaging signal is an echo of the second imaging signal.

39. A computer-readable storage medium, wherein the computer-readable storage medium stores a computer program, and when the computer program is run on a computer, the computer is enabled to perform the method according to any one of claims 1 to 17.

40. A computer program product, wherein the computer program product comprises instructions for performing the method according to any one of claims 1 to 17.

41. A chip system, comprising a logic circuit, configured to: invoke a computer program from a memory, and run the computer program, to enable a communication device on which the chip system is installed to perform the method according to any one of claims 1 to 17.

Imaging target

Imaging apparatus

(a)

Imaging target

Imaging apparatus 1 at a location 1

Imaging apparatus 2 at a location 2

(b)

FIG. 1

Imaging target

Auxiliary information or auxiliary signal

Auxiliary apparatus

Imaging apparatus

(a)

Imaging target

Imaging apparatus 2

Auxiliary information or auxiliary signal

Auxiliary information or auxiliary signal

Auxiliary apparatus

Imaging apparatus 1

(b)

FIG. 2

<u>300</u>

| First imaging apparatus | | First auxiliary apparatus |
|---|---|---|

S301: Auxiliary request information, used to request one or more auxiliary apparatuses to assist the first imaging apparatus in imaging →

S302: Auxiliary signal, where the auxiliary signal and a first imaging signal received or transmitted by the first imaging apparatus are jointly used for imaging ←

←- - - - - - - - - - S302': Auxiliary signal - - - - - - - - →

FIG. 3

S303: Perform pulse compression on a received auxiliary signal to obtain a pulse compression result

↓

S304: Determine auxiliary information based on information at an amplitude peak of the pulse compression result

(a)

S303': Perform Fourier transform on a received auxiliary signal to obtain a Fourier transform result

↓

S304': Determine auxiliary information based on phases corresponding to one or more frequencies in the Fourier transform result

(b)

FIG. 4

FIG. 5

S305: Perform fitting on a motion error of a first imaging apparatus based on motion information of the first imaging apparatus, location information of an auxiliary apparatus, and a phase delay of an auxiliary signal, to obtain a fitted motion error

S306: Correct an imaging result based on the fitted motion error

FIG. 6

**400**

```
┌─────────────┐        ┌─────────────┐                          ┌─────────────┐
│  Imaging    │        │  Imaging    │                          │  Auxiliary  │
│ apparatus 2 │        │ apparatus 1 │                          │ apparatus 1 │
└─────────────┘        └─────────────┘                          └─────────────┘
```

S401: Auxiliary
request information

S402: Auxiliary
response information

S403: Auxiliary signal

┌─────────────────┐    ┌─────────────────┐
│ S404': Transmit │    │ S404: Receive   │
│ an imaging      │    │ an imaging      │
│ signal 2        │    │ signal 1        │
└─────────────────┘    └─────────────────┘

┌─────────────────┐
│ S405: Perform   │
│ imaging based   │
│ on the auxiliary│
│ signal and the  │
│ imaging signal 1│
└─────────────────┘

FIG. 7

500

| | | |
|---|---|---|
| Imaging apparatus 2 | Imaging apparatus 1 | Auxiliary apparatus 1 |

S501: Auxiliary request information

S502: Auxiliary response information

S503: Auxiliary signal

S505: Receive an imaging signal 2

S504: Transmit an imaging signal 1

S506: Determine auxiliary information based on the auxiliary signal

S507: Auxiliary information

S508: Perform imaging based on the auxiliary information and the imaging signal 2

FIG. 8

**600**

FIG. 9

**700**

```
┌──────────────┐        ┌──────────────┐        ┌──────────────┐
│   Imaging    │        │   Imaging    │        │  Auxiliary   │
│ apparatus 2  │        │ apparatus 1  │        │ apparatus 1  │
└──────┬───────┘        └──────┬───────┘        └──────┬───────┘
       │                       │                       │
       │                       │    S701: Auxiliary    │
       │                       ├──────────────────────►│
       │                       │  request information  │
       │                       │                       │
       │                       │    S702: Auxiliary    │
       │                       │◄──────────────────────┤
       │                       │  response information │
       │                       │                       │
       │                       │                       │
       │                       ├─ S703: Auxiliary signal ─►│
       │                       │                       │
┌──────┴───────┐        ┌──────┴───────┐               │
│ S705: Receive an│     │ S704: Transmit an│            │
│ imaging signal 2│     │ imaging signal 1 │            │
└──────┬───────┘        └──────┬───────┘        ┌──────┴───────┐
       │                       │                │ S706: Determine│
       │                       │                │ auxiliary information│
       │                       │                │ based on the auxiliary│
       │                       │                │     signal    │
       │                       │                └──────┬───────┘
       │◄──── S707: Auxiliary information ─────────────┤
       │                       │                       │
┌──────┴───────┐               │                       │
│ S708: Perform imaging│       │                       │
│ based on the auxiliary│      │                       │
│ information and the  │       │                       │
│ imaging signal 2     │       │                       │
└──────┬───────┘               │                       │
       ▬                       ▬                       ▬
```

FIG. 10

FIG. 11(a)

FIG. 11(b)

**nSeg=10, sparsity=0.03, PAPR=11.8681 dB**

nSeg=10, sparsity=0.03, PAPR=11.8681 dB

**Top view**

FIG. 11(c)

Apparatus 2000

Transmitting unit 2010

Receiving unit 2020

FIG. 12

Apparatus 3000

Processor 3010 — Transceiver 3030

Memory 3020

FIG. 13

Chip system 4000

Logic circuit 4010

Input/Output interface 4020

FIG. 14

## INTERNATIONAL SEARCH REPORT

| International application No. |
| --- |
| **PCT/CN2023/121111** |

### A. CLASSIFICATION OF SUBJECT MATTER

G01S13/90(2006.01)i; G01S7/41(2006.01)n

According to International Patent Classification (IPC) or to both national classification and IPC

### B. FIELDS SEARCHED

Minimum documentation searched (classification system followed by classification symbols)

IPC:G01S13 G01S7

Documentation searched other than minimum documentation to the extent that such documents are included in the fields searched

Electronic data base consulted during the international search (name of data base and, where practicable, search terms used)

CNABS, CNTXT, CNKI: 补偿, 参考, 成像, 抖动, 辅助, 共同, 合成孔径, 基地, 聚焦, 偏移, 散焦, 图像, 误差, 相位, 校正, 校准, 延迟, 延时, 摇摆, 移动, 运动; DWPI, EPTXT, USTXT, WOTXT, VEN: assist, calibrate, compensate, correct, defocus, delay, deviation, error, focus, imaging, moving, phase, reference, SAR, shift, swing, together

### C. DOCUMENTS CONSIDERED TO BE RELEVANT

| Category* | Citation of document, with indication, where appropriate, of the relevant passages | Relevant to claim No. |
| --- | --- | --- |
| X | CN 106507962 B (INSTITUTE OF ELECTRONICS, CHINESE ACADEMY OF SCIENCES) 15 March 2017 (2017-03-15) description, paragraphs 8-29 and 36-50 | 1-5, 10-13, 18-22, 27-30, 35-37, 39-41 |
| X | 胡晓娥等 (HU, Xiae et al.). "一种高分辨率机载SAR实时运动补偿系统设计 (Non-official translation: A Design of High-Resolution Airborne SAR Real-Time Motion Compensation System)" 电子测量技术 (Electronic Measurement Technology), Vol. 35, No. 6, 30 June 2012 (2012-06-30), 41-44 ISSN: 1002-7300, text, sections 1.2 and 2-3 | 1-5, 10-13, 18-22, 27-30, 35-37, 39-41 |
| Y | CN 106507962 B (INSTITUTE OF ELECTRONICS, CHINESE ACADEMY OF SCIENCES) 15 March 2017 (2017-03-15) description, paragraphs 8-29 and 36-50 | 1-41 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **23 May 2024** | **07 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 787 018 A1**

## INTERNATIONAL SEARCH REPORT

| International application No. |
|---|
| **PCT/CN2023/121111** |

### C. DOCUMENTS CONSIDERED TO BE RELEVANT

| Category* | Citation of document, with indication, where appropriate, of the relevant passages | Relevant to claim No. |
|---|---|---|
| Y | 胡晓娥等 (HU, Xiae et al.). "一种高分辨率机载SAR实时运动补偿系统设计 (Non-official translation: A Design of High-Resolution Airborne SAR Real-Time Motion Compensation System)" 电子测量技术 (Electronic Measurement Technology), Vol. 35, No. 6, 30 June 2012 (2012-06-30), 41-44 ISSN: 1002-7300, text, sections 1.2 and 2-3 | 1-41 |
| Y | CN 111257876 A (INSTITUTE OF ELECTRONICS, CHINESE ACADEMY OF SCIENCES) 09 June 2020 (2020-06-09) description, paragraphs 26-77 | 1-41 |
| Y | KR 20230036341 A (LIG NEX1 CO., LTD.) 14 March 2023 (2023-03-14) description, paragraphs 45-59 and 81-90 | 8-9, 16-17, 25-26, 33-41 |
| A | CN 111751822 A (AEROSPACE INFORMATION RESEARCH INSTITUTE, CHINESE ACADEMY OF SCIENCES) 09 October 2020 (2020-10-09) entire document | 1-41 |
| A | CN 113030899 A (INNER MONGOLIA UNIVERSITY OF TECHNOLOGY) 25 June 2021 (2021-06-25) entire document | 1-41 |
| A | US 2006109162 A1 (KRIKORIAN, Kapriel V et al.) 25 May 2006 (2006-05-25) entire document | 1-41 |
| A | US 2012218140 A1 (BERGERON, Alain et al.) 30 August 2012 (2012-08-30) entire document | 1-41 |

Form PCT/ISA/210 (second sheet) (July 2022)

36

INTERNATIONAL SEARCH REPORT

**EP 4 787 018 A1**

INTERNATIONAL SEARCH REPORT
Information on patent family members

International application No.

**PCT/CN2023/121111**

| Patent document cited in search report | | | Publication date (day/month/year) | Patent family member(s) | | | Publication date (day/month/year) |
|---|---|---|---|---|---|---|---|
| CN | 106507962 | B | 15 March 2017 | None | | | |
| CN | 111257876 | A | 09 June 2020 | EP | 3865908 | A1 | 18 August 2021 |
| | | | | EP | 3865908 | B1 | 28 December 2022 |
| KR | 20230036341 | A | 14 March 2023 | KR | 102512907 | B1 | 22 March 2023 |
| CN | 111751822 | A | 09 October 2020 | CN | 111751822 | B | 04 March 2022 |
| CN | 113030899 | A | 25 June 2021 | None | | | |
| US | 2006109162 | A1 | 25 May 2006 | US | 7106243 | B2 | 12 September 2006 |
| US | 2012218140 | A1 | 30 August 2012 | US | 2018113208 | A1 | 26 April 2018 |
| | | | | US | 10042049 | B2 | 07 August 2018 |
| | | | | US | 2018113207 | A1 | 26 April 2018 |
| | | | | US | 10175351 | B2 | 08 January 2019 |
| | | | | CA | 2802784 | A1 | 05 January 2012 |
| | | | | CA | 2802784 | C | 15 March 2016 |
| | | | | EP | 2585849 | A1 | 01 May 2013 |
| | | | | EP | 2585849 | B1 | 20 March 2019 |
| | | | | WO | 2012000074 | A1 | 05 January 2012 |
| | | | | US | 9176227 | B2 | 03 November 2015 |

Form PCT/ISA/210 (patent family annex) (July 2022)